# EUROPEAN PATENT APPLICATION

(11) **EP 4 770 159 A1**
(43) Date of publication of application: **01.07.2026**
(21) Application number: 23961908.3
(22) Date of filing: 21.12.2023
(51) Int. Cl.: H04W 12/12, H04W 74/08

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN); LI, Yapu, Dongguan, Guangdong 523860 (CN); GAO, Ning, Dongguan, Guangdong 523860 (CN)
(74) Representative: RGTH
(86) International application number: PCT/CN2023/140693
(87) International publication number: WO 2025/129573

(57) **Abstract**

Provided are a wireless communication method and a communication device. The method comprises: a first STA sends a first PPDU to a second STA, the first PPDU comprising first information and second information, the first information being used for preempting a TXOP of the second STA and/or indicate that the first STA has low latency data to be transmitted, and the second information being used for determining the legitimacy of the first STA.

## Description

### TECHNICAL FIELD

This application relates to the field of communications technologies, and more specifically, to a wireless communication method and a communication device.

### BACKGROUND

In the related art, if a station (station, STA) has to-be-transmitted low-latency data, the STA may transmit a preemption request (preemption request, PR) to an access point (access point, AP), to obtain a transmission opportunity (transmission opportunity, TXOP).

### SUMMARY

This application provides a wireless communication method and a communication device. Various aspects of this application are described below.

According to a first aspect, a wireless communication method is provided, including: transmitting, by a first STA, a first physical protocol data unit (physical protocol data unit, PPDU) to a second STA, where the first PPDU includes first information and second information, the first information is used to preempt a TXOP of the second STA and/or indicate that the first STA includes to-be-transmitted low-latency data, and the second information is used to determine legitimacy of the first STA.

According to a second aspect, a wireless communication method is provided, including: receiving, by a second STA, a first PPDU transmitted by a first STA, where the first PPDU includes first information and second information, the first information is used to preempt a TXOP of the second STA and/or indicate that the first STA includes to-be-transmitted low-latency data, and the second information is used to determine legitimacy of the first STA.

According to a third aspect, a communication device is provided, where the communication device is a first STA. The communication device includes: a first communication module, configured to transmit a first PPDU to a second STA, where the first PPDU includes first information and second information, the first information is used to preempt a TXOP of the second STA and/or indicate that the first STA includes to-be-transmitted low-latency data, and the second information is used to determine legitimacy of the first STA.

According to a fourth aspect, a communication device is provided, where the communication device is a second STA. The communication device includes: a first communication module, configured to receive a first PPDU transmitted by a first STA, where the first PPDU includes first information and second information, the first information is used to preempt a TXOP of the second STA and/or indicate that the first STA includes to-be-transmitted low-latency data, and the second information is used to determine legitimacy of the first STA.

According to a fifth aspect, a communication device is provided. The communication device includes a processor and a memory. The memory is configured to store one or more computer programs, and the processor is configured to invoke the computer program in the memory to cause the communication device to perform some or all of the steps of the method according to the first aspect and/or the second aspect.

According to a sixth aspect, an embodiment of this application provides a communications system, and the communications system includes the foregoing communication device. In another possible design, the system may further include another device that interacts with the communication device in the solution provided by this embodiment of this application.

According to a seventh aspect, an embodiment of this application provides a computer-readable storage medium. The computer-readable storage medium stores a computer program, and the computer program causes a communication device to perform some or all of the steps in a method according to the foregoing aspects.

According to an eighth aspect, an embodiment of this application provides a computer program product. The computer program product includes a non-transitory computer-readable storage medium storing a computer program, and the computer program is operable to cause a communication device to perform some or all of the steps of a method according to the foregoing aspects. In some implementations, the computer program product may be a software installation package.

According to a ninth aspect, an embodiment of this application provides a chip, where the chip includes a memory and a processor, and the processor may invoke a computer program from the memory and run the computer program, to implement a part or all of the steps described in the methods in the foregoing aspects.

In embodiments of this application, the first PPDU carries the first information, and the first information is used to preempt the TXOP of the second STA and/or indicate that the first STA includes to-be-transmitted low-latency data. In addition, embodiments of this application require the PPDU that carries the first information to carry the second information as well, and the second information is used to determine the legitimacy of the STA that transmits the first information. The PPDU is required to carry both the first information and the second information, so as to ensure security of the communications system.

### BRIEF DESCRIPTION OF THE DRAWINGS

FIG. 1 is a schematic diagram of a wireless communications system to which an embodiment of this application may be applied.
FIG. 2 is a schematic diagram of a location of a message integrity code (message integrity code, MIC) in a data frame.
FIG. 3 is a schematic diagram of an encryption process of a medium access control (medium access control, MAC) protocol data unit (MAC protocol data unit, MPDU).
FIG. 4 is a schematic diagram of a construction manner of additional authentication data (additional authentication data, AAD).
FIG. 5 is a schematic diagram of a format of a random number field.
FIG. 6 is a schematic diagram of a decryption process of an MPDU.
FIG. 7 is a schematic diagram of a format of a broadcast/multicast integrity protocol (broadcast/multicast integrity protocol, BIP).
FIG. 8 is a schematic diagram of a format of a management MIC element (management MIC element, MME) in FIG. 7.
FIG. 9 is a schematic diagram of a construction manner of AAD of a BIP.
FIG. 10 is a schematic diagram of a format of a null data PPDU (null data PPDU, NDP) feedback report (NDP feedback report poll, NFRP).
FIG. 11 is a schematic diagram of a format of a parameter set element of an NDP feedback report.
FIG. 12 is a schematic diagram of a format of an NDP.
FIG. 13 is an example diagram of a transmission process of a preemption request.
FIG. 14 is another example diagram of a transmission process of a preemption request.
FIG. 15 is an example diagram of a transmission process of a low latency indication.
FIG. 16 is a schematic flowchart of a wireless communication method according to an embodiment of this application.
FIG. 17 is a schematic diagram of a format of a clear-to-send (clear-to-send, CTS) frame.
FIG. 18 is a schematic diagram of a format of a control frame according to an embodiment of this application.
FIG. 19 is a schematic diagram of a format of a CTS frame according to an embodiment of this application.
FIG. 20 is a schematic flowchart of a wireless communication method according to another embodiment of this application.
FIG. 21 is a schematic diagram of an exchange manner of a packet number (packet number, PN) according to an embodiment of this application.
FIG. 22 is a schematic diagram of a PN interaction manner according to another embodiment of this application.
FIG. 23 is an example diagram of a location at which a PN is carried according to an embodiment of this application.
FIG. 24 is an example diagram of a location at which a PN is carried according to another embodiment of this application.
FIG. 25 is an example diagram of a location at which a PN is carried according to still another embodiment of this application.
FIG. 26 is a schematic diagram of a format of a multi-user request-to-send (multi-user request-to-send, MU-RTS) trigger frame.
FIG. 27 is an example diagram of a location at which a PN is carried according to still another embodiment of this application.
FIG. 28 is a schematic flowchart of a wireless communication method according to still another embodiment of this application.
FIG. 29 is a schematic diagram of an interaction manner of a sequence number according to an embodiment of this application.
FIG. 30 is a schematic diagram of an interaction manner of a sequence number according to another embodiment of this application.
FIG. 31 is an example diagram of a location at which a sequence number is carried according to an embodiment of this application.
FIG. 32 is an example diagram of a location at which a sequence number is carried according to another embodiment of this application.
FIG. 33 is an example diagram of a location at which a sequence number is carried according to still another embodiment of this application.
FIG. 34 is a schematic structural diagram of a communication device according to an embodiment of this application.
FIG. 35 is a schematic structural diagram of a communication device according to another embodiment of this application.
FIG. 36 is a schematic diagram of an apparatus to which an embodiment of this application is applicable.

### DESCRIPTION OF EMBODIMENTS

Technical solutions in this application are described below with reference to the accompanying drawings.

### Communications system

The technical solutions in embodiments of this application may be applied to various communications systems, for example, a wireless local area network (wireless local area networks, WLAN), wireless fidelity (wireless fidelity, WiFi), or another communications system.

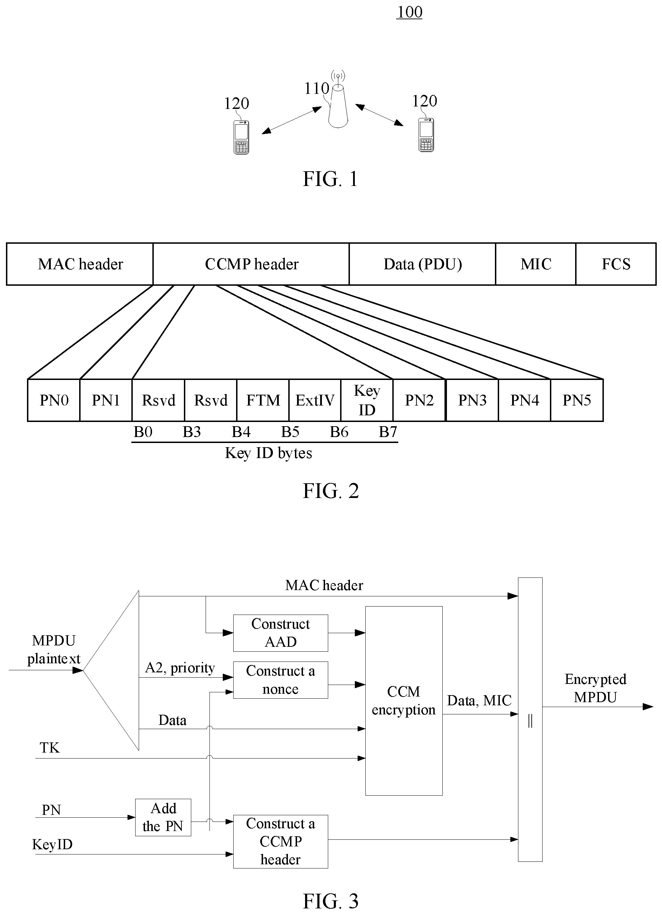

FIG. 1 shows a wireless communications system 100 to which embodiments of this application are applied. The wireless communications system 100 may include an access point 110, and a station (station, STA) 120 accessing a network through the access point (access point, AP) 110.

In some scenarios, an AP is referred to as an AP STA. In other words, in a sense, the AP is also a STA.

In some scenarios, a STA is referred to as a non-AP STA (non-AP STA).

Communication in the communications system 100 may be communication between an AP and a STA, or may be communication between STAs, or communication between a STA and a peer station (peer STA). The peer station may be a peer device that communicates with the STA. For example, the peer station may be an AP, or may be a STA.

An AP serves as a bridge between a wired network and a wireless network. A main function of the AP is to connect various clients of a wireless network together and then connect the wireless network to an Ethernet. An AP device may be a terminal device (for example, a mobile phone (mobile phone)) or a network device (for example, a router) that has a Wi-Fi chip.

It should be understood that a role of each communication device in the communications system 100 is not absolute. A mobile phone is used as an example. In a scenario in which the mobile phone is connected to a router, the mobile phone is a STA. In a scenario in which the mobile phone serves as a hotspot of another mobile phone, the mobile phone serves as an AP.

The AP and the STA may be devices applied in vehicle-to-everything; internet of things nodes, sensors, and the like in internet of things (internet of things, IoT); intelligent cameras, intelligent remote controls, intelligent water meters, intelligent electricity meters, and the like in smart home; and sensors and the like in smart city.

In some embodiments, both the STA and the AP may support the 802.11be standard. The STA or the AP may alternatively support a plurality of current and future WLAN standards of the 802.11 family, such as 802.11ax, 802.11ac, 802.11n, 802.11g, 802.11b, and 802.11a.

One or more links exist between the STA and the AP. In some embodiments, the STA and the AP support multi-band communication. For example, the STA and the AP may simultaneously communicate on 2.4GHz, 5GHz, 6GHz, 45GHz, and 60 GHz frequency bands, or simultaneously communicate on different channels on a same frequency band (or different frequency bands), to improve a communication throughput and/or reliability between devices. Such a device is usually referred to as a multi-band device, or a multi-link device (multi-link device, MLD), and is sometimes also referred to as a multi-link entity or a multi-band entity. The multi-link device may be an access point device, or may be a station device. If the multi-link device is an access point device, the multi-link device may include one or more APs; if the multi-link device is a station device, the multi-link device may include one or more non-AP STAs.

A multi-link device including one or more APs may be referred to as an access point multi-link device (access point multi-link device, AP MLD), and a multi-link device including one or more non-AP STAs may be referred to as a non-access point multi-link device (non-AP multi-link device, non-AP MLD).

In embodiments of this application, the AP may include a plurality of APs, and the non-AP STA may include a plurality of STAs. A plurality of links may be formed between the plurality of APs and the plurality of STAs, and data communication may be performed between the plurality of APs and the plurality of STAs over a corresponding link.

In embodiments of this application, the STA may be any one of the following that supports the WLAN/WiFi technology: a mobile phone, a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Frequency bands supported in the WLAN technology may include but are not limited to a low frequency band (for example, 2.4 GHz, 5 GHz, or 6 GHz) and a high frequency band (for example, 45 GHz or 60 GHz).

FIG. 1 exemplarily shows one AP and two STAs. Optionally, the communications system 100 may include a plurality of APs and another quantity of STAs. This is not limited in embodiments of this application. In FIG. 1, an AP, a STA 120a, and a STA 120b may be located in a same basic service set (basic service set, BSS). The AP may be associated with the STA 120a. The AP may be associated with the STA 120b.

It should be understood that in embodiments of this application, a device having a communication function in a network or a system may be referred to as a communication device. The communications system 100 shown in FIG. 1 is used as an example. The communication device may include an AP 110 and a STA 120 that have a communication function. In addition, the communication device mentioned in embodiments of this application may further include another device in the communications system 100, for example, another network entity (not shown in FIG. 1) such as a network controller or a gateway. This is not limited in this embodiment of this application.

The AP and the STA may be deployed on land, including being deployed indoors or outdoors, handheld, or vehicle-mounted, may be deployed on a water surface, or may be deployed on a plane, a balloon, or a satellite in the air. In embodiments of this application, a scenario in which the AP and the STA are located is not limited.

It should be understood that all or a part of functions of the communication device in this application may also be implemented by software functions running on hardware, or by virtualization functions instantiated on a platform (for example, a cloud platform).

### Message integrity code (message integrity code, MIC) of a unicast data frame and/or a unicast management frame

As shown in FIG. 2, according to the standard Draft P802.11REVme_D4.1, in a counter mode (counter mode, CTR) with Cipher Block Chaining (cipher block chaining, CBC) Message Authentication Code (message authentication code, MAC) Protocol (CTR with CBC-MAC Protocol, CCMP), a CCMP header is inserted between a frame header and a frame body in a medium access control protocol data unit (medium access control (MAC) protocol data unit, MPDU, or referred to as MAC frame), and an encrypted MIC is included in the encrypted frame body to achieve data frame encryption and integrity protection.

CCMP-128 adds 16 bytes to an original MPDU. The CCMP header and a MIC field each occupy 8 bytes of the 16 bytes. CCMP-256 adds 24 bytes to an original MPDU. The CCMP header occupies 8 bytes and a MIC field occupies 16 bytes. The CCMP header is constructed based on PN, ExtIV, and Key ID (Key ID) subfields. The PN includes 48 bits and is represented by 6 bytes. PN5 is a most significant byte of the PN, and PN0 is a least significant byte of the PN.

As shown in FIG. 3, the CCMP uses fields in an MPDU header to construct AAD. A CCM algorithm provides integrity protection for fields in the AAD. During calculation of the AAD, MPDU header fields that may change during retransmission are muted by being masked out.

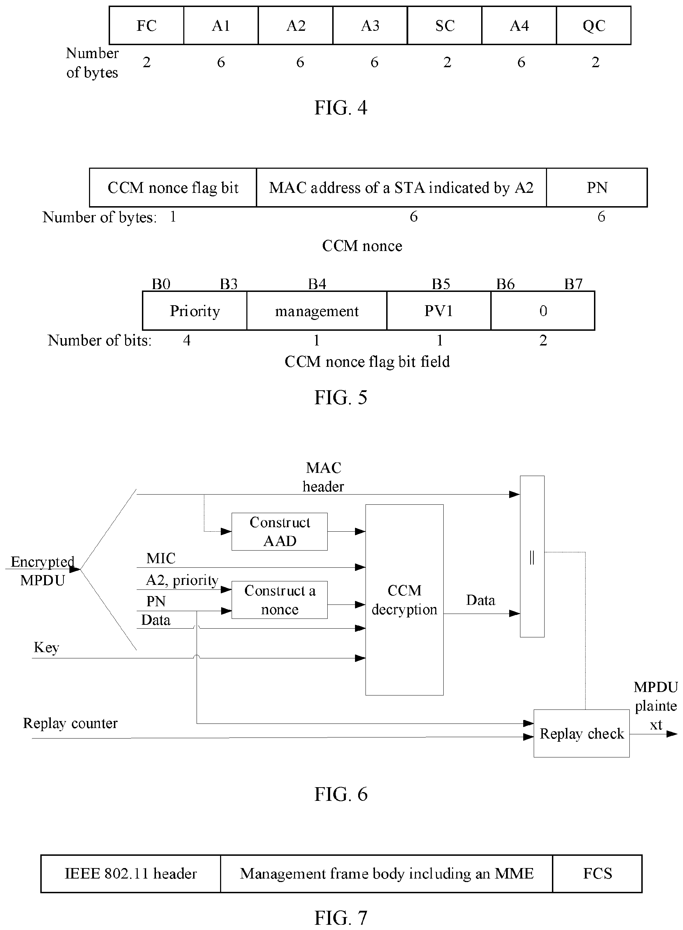

FIG. 4 shows construction of AAD of a protocol version 0 (protocol version, PV0) MPDU. FC represents a frame control (frame control, FC) field, with some subfields masked by a mask of zeros, of the MPDU. A1 represents an address 1 field of the MPDU. A2 represents an address 2 field of the MPDU. A3 represents an address 3 field of the MPDU. SC represents a sequence control (sequence control, SC) field, with a sequence number subfield masked, of the MPDU. A4 represents an address 4 field (if present) of the MPDU. QC represents a quality of service (quanlity of service null, QoS) control field (if present), including a MAC service data unit (MAC service data unit, MSDU) priority, of the MPDU.

Referring to FIG. 5, a CCM nonce (nonce) may be constructed based on the PN, A2 (MPDU address 2), and the MPDU priority. For details, refer to Section 12.5.2.3.4 of the standard "Draft P802.11REVme_D4.1". If a binary value (a most significant bit is placed at the beginning) of a type field of the FC field is 10 (10 represents a data frame) and the MPDU header includes the QoS control field, a value of the MPDU priority is equal to a value of a traffic identifier (traffic identifier, TID) subfield. If a binary value (a most significant bit is placed at the beginning) of a type field of the FC field is 00 (00 represents a management frame) and the frame is a QoS management frame (QoS management frame, QMF), a value of the MPDU priority is equal to a value of an access category index (access category index, ACI) subfield of a sequence number field. In other cases, the value of the MPDU priority is fixed to 0.

As shown in FIG. 3, a ciphertext and an encrypted MIC may be formed based on a temporary key, AAD, a nonce, and MPDU data. A CCM encryption algorithm is described in IETF RFC 3610. The key, the nonce, plaintext data, and the AAD are provided to the CCM encryption algorithm as K, N, m and a in the encryption algorithm. The CCM encryption algorithm generates a result c. The result c includes an encrypted message and an encrypted authentication value U. The encrypted message represents an encrypted frame body, and the authentication value U represents a MIC.

In short, CCM encryption is to connect a part of the frame header (that is, a field forming the AAD) and the frame body to generate a MIC, and then encrypt the frame body into blocks to generate encrypted data. For details, refer to IETF RFC 3610 Counter with CBC-MAC (CCM). The encryption algorithm is briefly described as follows.

To-be-verified Input information is as follows: B_0 ∥ a ∥ padding ∥ m ∥ padding, where B_0 is total length information including a nonce (nouce) and to-be-verified content, a represents AAD, m represents a message to be encrypted, and ∥ represents string concatenation.

The to-be-verified input information is encrypted (based on the Advanced Encryption Standard (advanced encryption standard, AES)): X_1 = E(K, B_0), X_i+1 = E(K, X_i XOR B_i); for i=1, ..., n, where XOR represents an exclusive OR operation.

A validation field T is generated: T = first-M-bytes(X_n+1).

An auto-increment counter is encrypted to generate a cipher stream: S_i = E(K, A_i) for i=0, 1, 2, ....

An encrypted message x is generated: c = m XOR (S_1 ∥ S_2 ∥ ...).

A validation value U is generated: U = T XOR first-M-bytes(S_0).

Final encrypted content c is generated: x ∥ U.

FIG. 6 shows a CCM processing process at a receiver. The receiver verifies integrity of the authentication value and the frame body, and decrypts the frame body. MIC verification is implemented by comparing a difference between a received MIC and a calculated MIC. A plaintext is returned only after the MIC verification succeeds.

Similar to the CCMP, the Galois/counter mode (galois/counter mode, GCM) protocol (GCM protocol, GCMP) inserts a GCMP header between the MAC frame header and the frame body, and inserts a MIC between the encrypted frame body and a frame check sequence (frame check sequence, FCS) to implement encryption and integrity protection for a data frame. This protocol uses a GCM method (based on an AES algorithm) to generate a MIC and encrypted data. For details, refer to NIST Special Publication 800-38D. Specifically, the key, the nonce, the plaintext data, and the AAD may be passed to a GCM encryption algorithm as K, IV, P, and A respectively. The GCM encryption algorithm generates a ciphertext C and an authentication tag T. The ciphertext C represents the encrypted frame body, and T indicates the MIC.

### MICs of broadcast management frame and multicast management frame

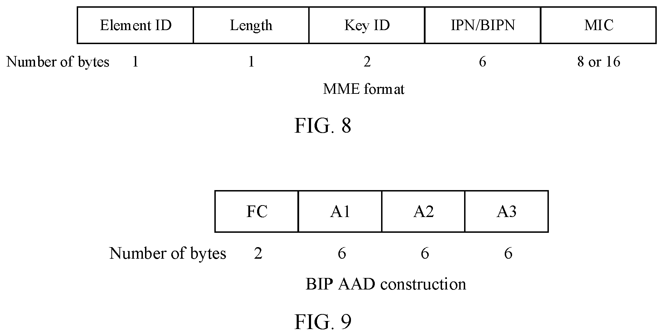

According to standard Draft P802.11REVme_D4.1, in the broadcast/multicast integrity protocol (In Broadcast/multicast integrity protocol, BIP), a beacon integrity group temporal key (beacon integrity group temporal key, BIGTK) is used to generate a MIC for a beacon frame (a broadcast management frame), and an integrity group temporal key (integrity group temporal key, IGTK) is used to generate a MIC for a multicast management frame. For an encapsulation location of a MIC in the BIP, refer to FIG. 7 and FIG. 8.

BIP-CMAC-128 provides data integrity and replay protection using AES-128 in a CMAC mode (with a 128-bit integrity check key) and a 128-bit (16-byte) CMAC TLen value. BIP-CMAC-256 provides data integrity and replay protection using AES-256 in a CMAC mode (with a 256-bit integrity check key) and a 128-bit (16-byte) CMAC TLen value. NIST Special Publication 800-38B defines a CMAC algorithm, and NIST Special Publication 800-38D defines a GMAC algorithm. For BIP-CMAC-256, an output for CMAC is 128 bits (16 bytes) and is not truncated. For BIP-CMAC-128, an output for CMAC is truncated to 64 bits: MIC = Truncate-64(CMAC Output).

As mentioned above, BIP-CMAC-128 uses AES with a 128-bit integrity key, and BIP-CMAC-256 uses AES with a 256-bit integrity key. BIP-CMAC-128 and BIP-CMAC-256 authentication tags should be 128 bits (16 bytes) without truncation.

AAD of the BIP is constructed based on an MPDU header. The AAD is constructed based on an FC field of an MPDU, an address 1 (A1) field of the MPDU, an address 2 (A2) field of the MPDU, and an address 3 (A3) field of the MPDU. When the AAD is constructed, a retry (retry) subfield in the FC field (bit number 11, numbered from 0, and indicating the twelfth least significant bit), a power management (power management) subfield (bit 12), and a more data (more data) subfield (bit 13) are masked with a mask of zeros, and other subfields are not adjusted. FIG. 9 shows a format of AAD. A length of the AAD is 20 bytes.

For BIP-GMAC-128 and BIP-GMAC-256, an initial vector passed to GMAC should be a concatenation (concatenation) of both of the following: (A2 in the MAC header of the MPDU) and a non-negative integer inserted in an MME IPN/BIPN field.

The AAD and a frame body of a management frame containing an MME is concatenated to calculate a MIC and insert an output into a MIC field of the MME. If the frame is a protected beacon frame, a timestamp field in the frame body is masked with a mask of zeros during calculation. For BIP-CMAC-128, the MIC is 64 bits, and the MIC is obtained through calculation based on AES-128-CMAC. For BIP-CMAC-256, the MIC is 128 bits, and the MIC is obtained through calculation based on AES-128-GMAC.

In summary, the BIP concatenates a part of a frame header of the management frame (that is, a field forming the AAD) and the frame body (including the MME, primarily IPN/BIPN in the MME) (denoted as m after the concatenation), and then generates a MIC using a CMAC or GMAC method.

The CMAC is a variant based on the CBC-MAC method. Refer to NIST SP800-38B-CMAC. Lengths of the BIGTK, the IGTK, m, and the MIC are used respectively as input parameters K, M, Tlen for CMAC.

The GMAC is a special form of a GCM method, and is used to generate a message authentication code for unencrypted data. For details, refer to NIST Special Publication 800-38D. The BIGTK or IGTK, the IV (formed by a concatenation of A2 and IPN/BIPN), m, and the AAD are respectively used as input parameters K, IV, P and A for GMAC.

### NFR

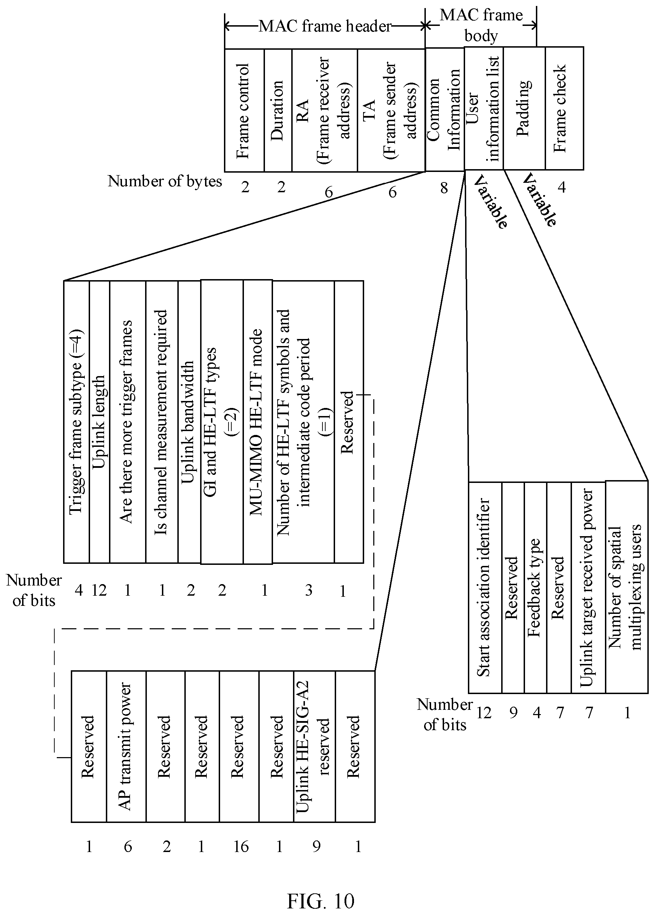

According to Draft Standard P802.11REVme_D4.1, an AP may transmit an NDP feedback report poll (NDP feedback report poll, NFRP) trigger frame to obtain NDPs from a plurality of STAs. FIG. 10 shows a format of an NFRP frame. After receiving the NFRP trigger frame, a STA transmits an NDP (a format of the NDP is referred to as a high efficiency (high efficiency, HE) trigger-based (trigger based, TB) feedback (feedback) NDP) in response. When a quantity of bytes of buffered data of the STA is greater than or equal to a resource request buffer threshold (resource request buffer threshold), a feedback status (FEEDBACK_STATUS) value of the STA is 1; otherwise, the FEEDBACK_STATUS value of the STA is 0 (FEEDBACK_STATUS is used to modulate a tone of a long training field (long training field, LTF) for NDP transmission. The resource request buffer threshold may be indicated by the AP in an NDP feedback report parameter set (NDP feedback report parameter set) element in a beacon (beacon) frame and/or a probe response (probe response) frame and/or an association response (association response) frame and/or a reassociation response (reassociation response) frame. Alternatively, when the indication is not received, the resource request buffer threshold is a default value. The default value may be 256 bytes.

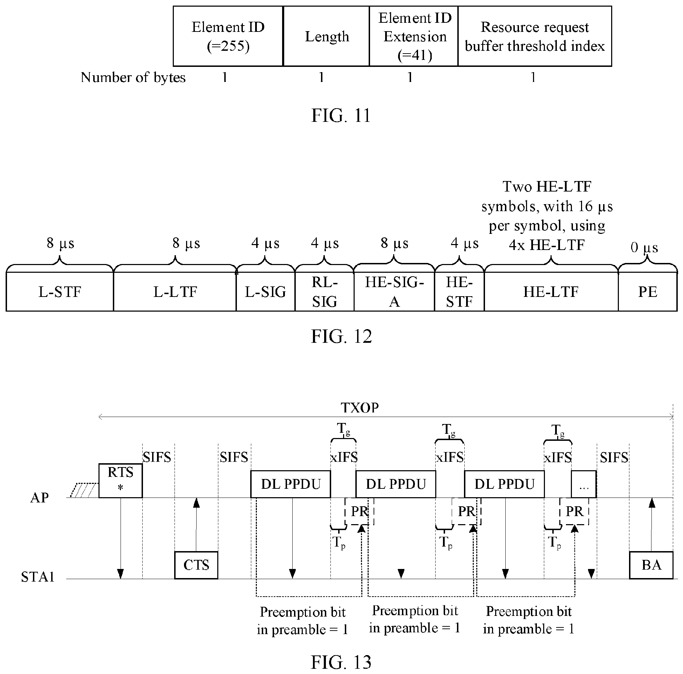

FIG. 11 shows a format of an NDP feedback report parameter set element. A resource request buffer threshold exponent field (resource request buffer threshold exponent field) is used to calculate a buffer threshold between two different resource requests. Assuming that a value of the resource request buffer threshold field is a, the resource request buffer threshold may be equal to 2a bytes. If the AP has not transmitted an NDP feedback report parameter set element, the resource request buffer threshold may be equal to 256 bytes.

A format of the HE TB feedback NDP is shown in FIG. 12. Referring to FIG. 12, the NDP format adopts an HE TB PPDU format. Different from the HE TB PPDU format, the NDP format has no data field. Duration of a packet extension (packet extension, PE) field in the NDP format is 0 microseconds. The NDP format has two symbols of type 4x HE-LTF, and a guard interval (guard interval, GI) used is 3.2 microseconds. Duration of a 1x HE-LTF symbol is 3.2 microseconds, duration of a 2x HE-LTF symbol is 6.4 microseconds, and duration of a 4x HE-LTF symbol is 12.8 microseconds, for which the GI is not calculated.

A different resource unit tone set index (RU_TONE_SET_INDEX) in an HE-LTF field is used to identify an association identity (association identity, AID) and a feedback status (FEEDBACK_STATUS) of a different non-AP STA. Details are shown in Table 1.

**Table 1: HE-LTF tone mapping of HE TB feedback NDP (11ax)**

| RU_ TONE_ SET_IN DEX | 80 MHz | | 40 MHz | | 20 MHz | |
|---|---|---|---|---|---|---|
| | K_{tone_NDPµ} (FEEDBA CK_STAT US=1) | K_{tone_NDPµ} (FEEDBA CK_STAT US=0) | K_{tone_NDPµ} (FEEDBA CK_STAT US=1) | K_{tone_NDPµ} (FEEDBA CK_STAT US=0) | K_{tone_NDPµ} (FEEDBA CK_STAT US=1) | K_{tone_NDPµ} (FEEDBA CK_STAT US=0) |
| 1 | Using 20MHz (FEEDBA CK_STAT US=1), with a tone index of - 384 | Using 20MHz (FEEDBA CK_STAT US=0), with a tone index of - 384 | Using 20MHz (FEEDBA CK_STAT US=1), with a tone index of - 128 | Using 20MHz (FEEDBA CK_STAT US=0), with a tone index of - 128 | -113,-77,-41,6,42,78 | -112,-76,-40,7,43,79 |
| 2 | | | | | -111,-75,-39,8,44,80 | -110,-74,-38,9,45,81 |
| 3 | | | | | -109,-73,-37,10,46,82 | -108,-72,-36,11,47,83 |
| 4 | | | | | -107,-71,-35,12,48,84 | -106,-70,-34,13,49,85 |
| 5 | | | | | -105,-69,-33,14,50,86 | -104,-68,-32,15,51,87 |
| 6 | | | | | -103,-67,-31,16,52,88 | -102,-66,-30,17,53,89 |
| 7 | | | | | -101,-65,-29,18,54,90 | -100,-64,-28,19,55,91 |
| 8 | | | | | -99,-63,-27,20,56,92 | -98,-62,-26,21,57,93 |
| 9 | | | | | -97,-63,-27,20,56,92 | -96,-60,-24,23,59,95 |
| 10 | | | | | -95,-59,-23,24,60,96 | -94,-58,-22,25,61,97 |
| 11 | | | | | -93,-57,-21,26,62,98 | -92,-56,-20,27,63,99 |
| 12 | | | | | -91,-55,-19,28,64,100 | -90,-54,-18,29,65,101 |
| 13 | | | | | -89,-53,-17,30,66,102 | -88,-52,-16,31,67,103 |
| 14 | | | | | -87,-51,-15,32,68,104 | -86,-50,-14,33,69,105 |
| 15 | | | | | -85,-49,-13,34,70,106 | -84,-48,-12,35,71,107 |
| 16 | | | | | -83,-47,-11,36,72,108 | -82,-46,-10,37,73,109 |
| 17 | | | | | -81,-45,-9,38,74,110 | -80,-44,-8,39,75,111 |
| 18 | | | | | -79,-43,-7,40,76,112 | -78,-42,-6,41,77,113 |
| 19-36 | Using 20MHz (FEEDBA CK_STAT US=1), with a tone index of - 128 | Using 20MHz (FEEDBA CK_STAT US=0), with a tone index of - 128 | Using 20MHz (FEEDBA CK_STAT US=1), with a tone index of +128 | Using 20MHz (FEEDBA CK_STAT US=0), with a tone index of +128 | | |
| 37-54 | Using 20MHz (FEEDBA CK_STAT US=1), with a tone index of +128 | Using 20MHz (FEEDBA CK_STAT US=0), with a tone index of +128 | | | | |
| 55-72 | Using 20MHz (FEEDBA CK_STAT US=1), | Using 20MHz (FEEDBA CK_STAT US=0), | | | | |
| | with a tone index of +384 | with a tone index of +384 | | | | |

When a number of spatially multiplexed users) field in the NFRP trigger frame is set to 0, each RU_TONE_SET_INDEX corresponds to one non-AP STA (AID). When a bandwidth is 20 MHz, for a non-AP STA using RU_TONE_SET_INDEX = 1, FEEDBACK_STATUS = 1 corresponds to energy present on tones -113, -77, -41, 6, 42, and 78 in the HE-LTF, and other tones have no energy; and FEEDBACK_STATUS = 0 corresponds to energy present on tones -112, -76, -40, 7, 43, 79 in the HE-LTF, and other tones have no energy. When the bandwidth is 40 MHz or 80 MHz, a 20MHz tone mapping relationship is extended by 1 or 3 times respectively, so that more non-AP STAs (AIDs) may be mapped. A start association identity in the NFRP trigger frame corresponds to an RU_TONE_SET_INDEX value of 1. For example, if the start association identity is 6, a non-AP STA whose AID value is 6 corresponds to an RU_TONE_SET_INDEX value of 1, a non-AP STA whose AID value is 7 corresponds to an RU_TONE_SET_INDEX value of 2, and so on.

When the value of the number of spatially multiplexed users field in the NFRP trigger frame is 1, each RU_TONE_SET_INDEX corresponds to two non-AP STAs (AIDs), and the two non-AP STAs are distinguished by using different precoding matrices that are pre-allocated. A start association identity in the NFRP trigger frame corresponds to RU_TONE_SET_INDEX value of 1. For example, if the start association identity is 6, two non-AP STAs whose AID values are respectively 6 and 7 correspond to an RU_TONE_SET_INDEX value of 1, two non-AP STAs whose AID values are respectively 8 and 9 correspond to an RU_TONE_SET_INDEX value of 2, and so on.

### Transmit a preemption request (preemption request, PR) using a small interframe space

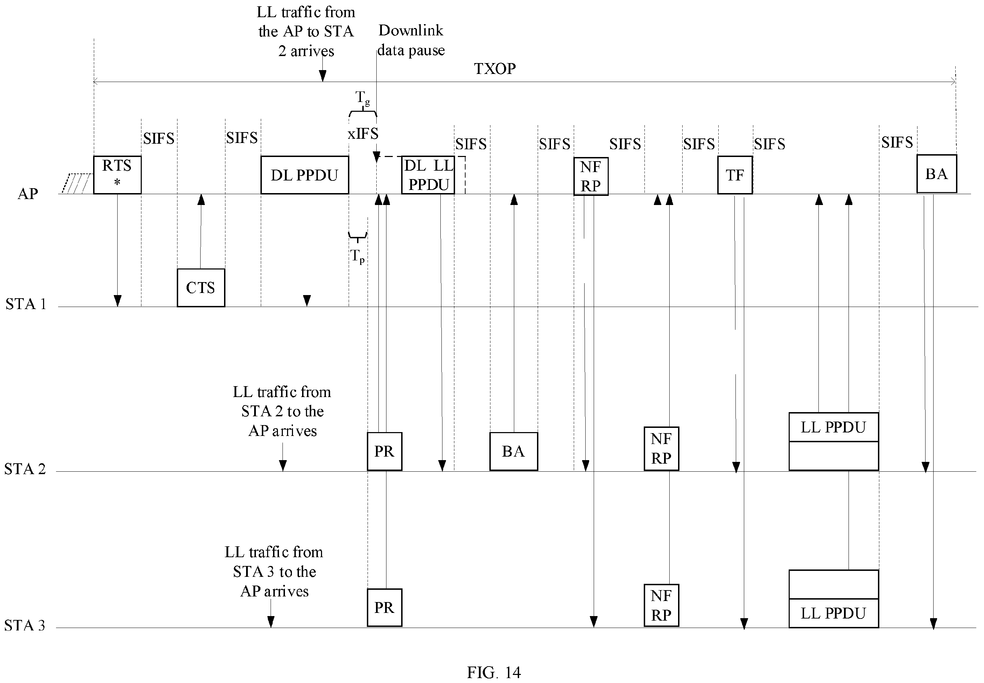

A related proposal (11-23-1229-01-0uhr-preemption-for-low-latency-application-follow-up) proposes a solution for transmitting a preemption request using a small interframe space. Referring to FIG. 13 and FIG. 14, an AP splits a long downlink PPDU into a plurality of short PPDUs. The plurality of short PPDUs are continuously transmitted at an x interframe space (x interframe space, xIFS). xIFS is to be determined, for example, may be a priority interframe space (priority interframe space, PIFS). A preamble (preamble) of a 1^{st} short PPDU indicates whether transmission in duration (for example, current transmission duration) can be preempted (preemption). If the transmission can be preempted, another STA with low-latency data to be transmitted (for example, STA 2 or STA 3) in FIG. 14 may use a shorter interframe space (Tp) than the xIFS.) to transmit a preemption request (similar to a CTS frame) to the AP, thereby interrupting downlink transmission of the AP.

### MU-RTS and transmission of preemption request

A related proposal (11-23-1950-00-00bn-considerations-on-preemption-request) proposes two types of sequences for transmitting preemption requests. The two types of sequences may be used to protect preempted transmission from interference by a hidden node in an overlapping basic service set (overlapping basic service set, OBSS). For example, a transmission medium may be protected with an MU-RTS/CTS sequence prior to preemptive transmission. Alternatively, a transmission medium may be protected with an MU-RTS/CTS sequence at the beginning of a TXOP at which preemptive transmission is to be performed.

Because a plurality of STAs may simultaneously transmit preemption request frames, to prevent a collision, the proposal further proposes that PPDUs carrying preemption request frames must be consistent. To ensure consistency of PPDUs transmitted by the plurality of STAs, a scrambler initialization value (scrambler initialization value) and receiver address (receiver address, RA) to be used by the preemption request frame can be indicated in a signal (signal, SIG) field (for example, a universal signal (universal signal, U-SIG) field or an ultra-high reliability (ultra-high reliability, UHR)-SIG field) of a preamble PPDU. The scrambler initialization value is carried in a preamble of the PPDU, and is used to generate a scrambling code sequence of the PPDU. The RA indicates a STA that receives the frame. Alternatively, the scrambler initialization value and the RA to be used by the preemption request frame may be set to fixed values.

### Low-latency indication

The related art further provides a method for preferentially transmitting low-latency data. In the method, a STA may indicate to an AP (via CTS or modified NDP) on a reserved resource unit (resource unit, RU) that there is low-latency data to be transmitted and/or that TXOP preemption is required.

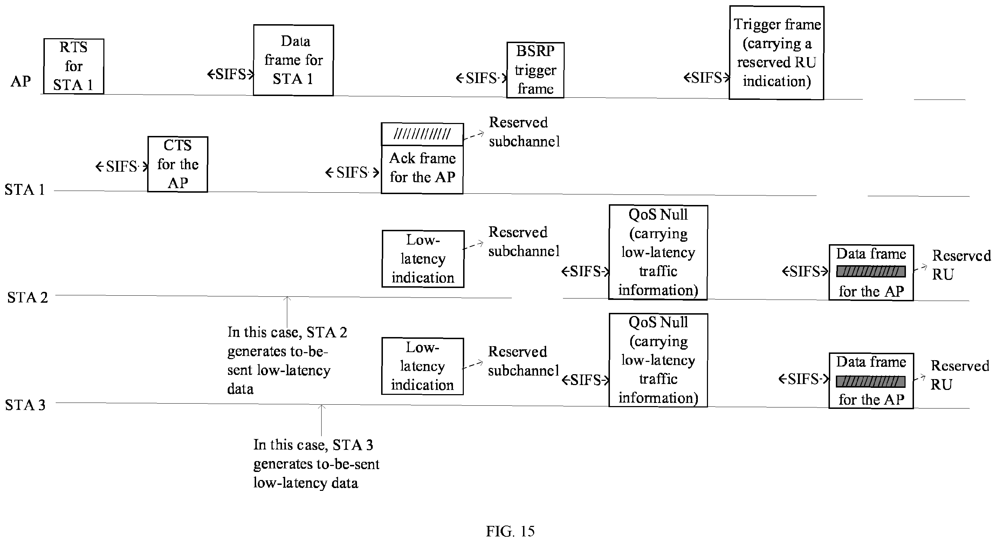

For example, as shown in FIG. 15, an AP obtains a TXOP, and the AP performs at least one downlink transmission with a first STA. The first STA reserves at least one subchannel or RU when performing an uplink response or acknowledgment to the AP. If another STA generates to-be-transmitted low-latency data before the uplink response or acknowledgment, the another STA may transmit a low-latency indication by using the reserved subchannel or RU when the uplink response or acknowledgment is performed. After receiving the low latency indication, the AP uses a buffer status report poll (buffer status report poll, BSRP) trigger frame to obtain buffer status reports of a plurality of STAs or uses an NFRP to obtain NDPs of a plurality of STAs. Then, a trigger frame-based uplink transmission process is used to trigger each STA to perform uplink transmission.

### Protection of MAC header and control frame

According to a related proposal (for example, 11-23-0312-00-0uhr-thoughts-on-secure-control-frames, 11-23-0356-01-0uhr-mac-header-protection, 11-23-1888-01-00bn-mac-header-protection-follow-up, 11-23-0352-01-0uhr-enhanced-security-discussion, 11-23-1102-00-0uhr-security-enhancement-follow-up, 11-23-0286-00-0uhr-trigger-frame-protection, or 11-23-1914-00-00bn-enhanced-security-considerations-in-uhr), a portion of the MAC frame header remains unprotected. This may allow an attacker to transmit a spoofed QoS Null frame or replay QoS data frame, causing a STA to perform unnecessary processing (for example, preparing and transmitting a TB PPDU) and thus increasing power consumption. Alternatively, the attacker may spoof the STA to enter a power saving mode and then continue to spoof the STA to re-associate with an AP to obtain previously buffered data of the AP, causing data leakage. The foregoing proposal further points out that a MIC of the MAC frame header needs to be calculated separately instead of being encrypted together with a frame body. This is because the MAC frame header changes during retransmission, therefore the MIC needs to be recalculated (an amount of data in the MAC frame header is small, and therefore computational overheads are low), and the frame body is not re-encrypted during retransmission (an amount of data in the frame body is large, and therefore computational overheads are high).

The foregoing proposal further points out that currently control frames with frame bodies (for example, trigger frames (trigger frame, TF), block acknowledgment request (block ack request, BAR) frames, block acknowledgment (block ack, BA) frames, and NDP announcement (NDP announcement, NDPA) frames remain unprotected. Therefore, such frames may be used by an attacker to trigger a STA to initiate unnecessary transmission, causing power consumption. Alternatively, such frames may be spoofed by an attacker, resulting in data loss. Therefore, the foregoing proposal points out that a MIC mechanism may be used to perform integrity check on the MAC frame header and the frame body of the control frame, so as to prevent tampering. A MIC may be generated by using a control group temporal key (control group temporal key, CGTK) dedicated for control frame protection, or may be generated by using a control pairwise transient key (control pairwise transient key, CPTK) dedicated for control frame protection.

It may be learned from the foregoing description that, to meet a transmission requirement of low-latency data, some mechanisms are introduced in the related art. For example, if a STA has to-be-transmitted low-latency data, the STA may transmit a preemption request to an AP, to obtain a TXOP. For another example, a STA may transmit a low-latency indication, to indicate that there is to-be-transmitted low-latency data and/or that a TXOP needs to be preempted. However, how to ensure security of such mechanisms is a problem that needs to be solved. For example, in a process of transmitting a preemption request, protection for the preemption request is not considered in the related art. Therefore, an attacker may spoof a STA to transmit a preemption request, causing unnecessary interruption of downlink transmission of an AP, which increases a transmission delay. In addition, if an attacker spoofs a STA to transmit a preemption request, the AP may be caused to trigger the STA to perform unnecessary transmission, resulting in power consumption. Similarly, in a process of transmitting a low-latency indication, protection for a preemption request is not considered in the related art. Therefore, an attacker may spoof a STA to transmit a low-latency indication, and consequently, downlink transmission of the AP is interrupted unnecessarily, increasing a transmission delay. In addition, if an attacker spoofs a STA to transmit a low-latency indication, the AP may be caused to trigger the STA to perform unnecessary transmission, resulting in power consumption.

To address the foregoing problems, the following describes embodiments of this application in detail.

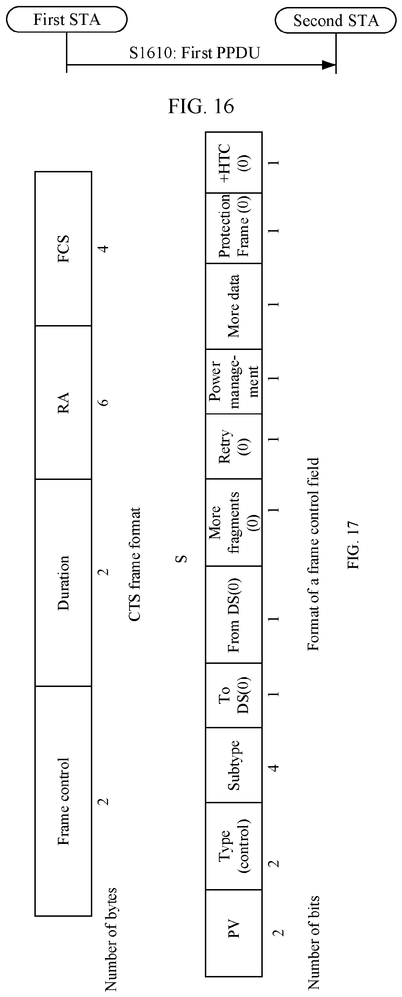

FIG. 16 is a schematic flowchart of a wireless communication method according to an embodiment of this application. The method in FIG. 16 is described from a perspective of interaction between a first STA and a second STA. The first STA may be a STA that expects to preempt a TXOP, or the first STA may be a STA that has to-be-transmitted low-latency data (or traffic). The second STA may be an owner of the TXOP. For example, the first STA is a non-AP STA, and the second STA is an AP. Alternatively, both the first STA and the second STA are non-AP STAs.

Refer to FIG. 16. Step S1610: The first STA transmits a first PPDU to the second STA. The first PPDU includes first information. The first information may be used to preempt a TXOP of the second STA and/or indicate that the first STA includes to-be-transmitted low-latency data. If the first information is used to preempt the TXOP of the second STA, the first information may be referred to as a preemption request or a preemption signal. If the first information is used to indicate that the first STA includes to-be-transmitted low-latency data, the first information may be referred to as a low-latency indication.

A manner in which the first information is carried in the first PPDU is not specifically limited in embodiments of this application. In some implementations, the first PPDU may include a first MAC frame, and the first information may be carried in the first MAC frame. The first MAC frame may be referred to as a preemption request frame or a low-latency indication frame. The first MAC frame may be, for example, a CTS frame. In some other implementations, the first information may alternatively be carried in a preamble of the first PPDU, for example, in an NDP preamble.

In addition to the first information, the first PPDU further includes second information. The second information is used to determine (or check) legitimacy of the first STA. In other words, the second information is used to determine (or check) that the first information (or a frame including the first information, or a PPDU including the first information) is transmitted by a legitimate STA (a legitimate STA may be an STA that is authenticated and associated and has a correct transmission key). Alternatively, the second information may be used to determine (or check) integrity of a frame including the first information (to prevent the frame including the first information from being tampered with) or integrity of a PPDU including the first information (to prevent the PPDU including the first information from being counterfeited). The second information is introduced in embodiments of this application to provide security protection for transmission of the first information. Based on the second information, the second STA may identify whether a STA transmitting the first information is a legitimate STA, to prevent transmission of the second STA from being interrupted by an attacker and/or prevent the second STA from triggering another STA to perform unnecessary transmission, thereby improving security of a communication process.

In some implementations, the second information may be generated based on encryption of a key of a specific type. For example, the second information may be information generated by encryption based on a group key. The group key mentioned herein may be, for example, one or a combination of the following: a group temporal key (group temporal key, GTK), an integrity group temporal key (integrity group temporal key, IGTK), a BIGTK), or a CGTK. For example, when a plurality of STAs simultaneously transmit the first information, if the plurality of STAs do not need to be distinguished, the second information may be generated through encryption by using a group key, and the second information is transmitted together with the first information, so as to verify legitimacy of a STA that transmits the first information.

In some implementations, the second information may be information generated by encryption based on a pairwise key. The pairwise key mentioned herein may be, for example, a pairwise transient key (pairwise transient key, PTK) or a CPTK. For example, when a plurality of STAs simultaneously transmit the first information, if the plurality of STAs need to be distinguished, the second information may be generated through encryption by using a pairwise key, and the second information is transmitted together with the first information, so as to verify legitimacy of a STA that transmits the first information. Certainly, in this case, the second information transmitted by the plurality of STAs may also be encrypted by using the foregoing group key, and the plurality of STAs may be distinguished in another manner. For example, different time domain, frequency domain, and/or code domain resources may be allocated or negotiated in advance for a plurality of STAs.

A manner in which the second information is carried in the first PPDU is not specifically limited in embodiments of this application. For example, the first PPDU may include a first MAC frame, and the second information may be carried in the first MAC frame. For another example, the second information may be carried in a preamble of the first PPDU. The following describes content of the second information and the manner of carrying the second information in more detail with reference to two embodiments by using examples.

### Embodiment 1: The second information is carried in a MAC frame

In Embodiment 1, the first PPDU is used to carry the first MAC frame, and the second information is carried in the first MAC frame. For example, the second information may be a MIC carried in the first MAC frame. As mentioned above, the first MAC frame may be a preemption request frame or a low-latency indication frame. Correspondingly, the second information may be used to determine (or check) legitimacy of a STA that transmits the preemption request frame or the low-latency indication frame. Alternatively, the second information may be used to determine (or check) integrity of the preemption request frame or the low-latency indication frame.

For a MIC generation manner, refer to related descriptions in section "MICs of broadcast management frame and multicast management frame" described above. An example in which the first MAC frame is a CTS frame is used below to describe the MIC generation manner.

FIG. 17 shows a frame format of a CTS frame. An entire frame header (including FC, duration (duration), and RA), PN, and FCS (optional) may be concatenated as a to-be-verified message (denoted as m). A key (for example, a pairwise key or a group key), m, and a length (128 bits or 256 bits) of the MIC are respectively used as input parameters K, M, Tlen for CMAC, and the MIC is generated by using a CMAC method. The CMAC is a variant based on the CBC-MAC. Refer to NIST SP800-38B-CMAC.

Alternatively, an entire frame header (including FC, duration, and RA), PN, and FCS (optional) may be concatenated as AAD, and the entire frame header (including the FC, the duration, and the RA) and the FCS (optional) may serve as a to-be-verified message (denoted as m), with the RA and the PN concatenated together as an initial vector. Then, a key (such as a pairwise key or a group key), the initial vector, m, and the AAD may be respectively used as input parameters K, IV, P, and A for GMAC, and the MIC is generated by using a GMAC method. The GMAC is a special form of the GCM method and is used to generate a MIC on unencrypted data. For details, refer to NIST Special Publication 800-38D.

A location of a MIC field in the first MAC frame is not specifically limited in embodiments of this application.

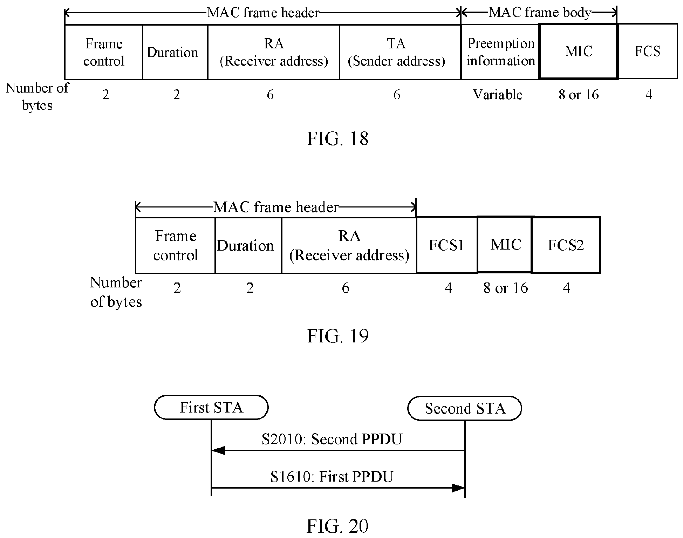

In some implementations, the first MAC frame includes a first FCS field, and the MIC field is located before the first FCS field. For example, the first MAC frame may be a newly defined control frame or a management frame. The MIC field may be carried before an FCS field of the control frame or the management frame. FIG. 18 shows a frame format of a control frame proposed in an embodiment of this application. The first information mentioned above is preemption information in FIG. 18. It may be learned from FIG. 18 that the MIC field is located before an FCS in the control frame.

In some implementations, the first MAC frame includes a first FCS field, and the MIC field is located after the first FCS field. The first MAC frame is, for example, the CTS frame shown in FIG. 19, and the first FCS field may be an FCS1 field in FIG. 19. It may be learned from FIG. 19 that the MIC is located after the FCS1. Further, in some implementations, a second FCS field may be added after the MIC field (that is, an FCS2 field in FIG. 19). The FCS2 field may be used for cyclic redundancy check (cyclic redundancy check, CRC) of an entire frame body, FCS1, and MIC. A calculation algorithm of the FCS2 may be the same as that of the FCS1. The MIC field is arranged after the FCS field, and a format before the MIC field may remain unchanged, which is simple to implement.

As mentioned above, the MIC may be generated based on the PN. The PN may be used to prevent a replay attack. The replay attack means that an attacker may buffer an intercepted frame and then retransmit it without modification. If there is no anti-replay mechanism, an attacker may process the retransmitted frame into a valid frame. The PN is generally an auto-incrementing integer, or may be an integer that is generated randomly each time. For generating a MIC based on a PN, a new MIC may be generated at each transmission. Even if content of the retransmitted frame is the same as that of a previous frame, the retransmitted frame carries a different MIC because PNs are different, thereby preventing a replay attack. The PN may be 16 bits, 24 bits, 32 bits, 48 bits, or more bits. In this solution, 48 bits are used as an example.

In some scenarios, the PN used for generating a MIC may be transmitted by the second STA to the first STA through previous downlink transmission (which may be a MAC frame or a PPDU). For example, if the second STA does not distinguish between STAs that transmit the first information (such as a preemption request or a low latency indication), to prevent a collision, PPDUs that carry the first information and that are transmitted by the STAs at a same moment need to be consistent. To ensure this, the STAs need to transmit PPDUs of a same type, for example, a non-high throughput PPDU (non-high throughput PPDU, non-HT PPDU), a non-high throughput duplicate PPDU (non-HT duplicate PPDU), or a TB PPDU. In addition, the STAs need to ensure consistency of preambles and predefine or negotiate in advance to use a same modulation and coding scheme (modulation and coding scheme, MCS) and a same number of spatial streams (number of spatial streams, NSS). In addition, the second STA needs to transmit a same PN value to the STAs in advance, so that MICs generated by the STAs are the same.

The following describes an exchange manner of the PN with reference to FIG. 20.

Referring to FIG. 20, before step S1610 is performed, the first STA receives a second PPDU transmitted by the second STA (refer to step S2010 in FIG. 20). The second PPDU includes target bits, and the target bits are a part or all of bits occupied by the PN. For example, the target bits are a part of the bits occupied by the PN, and the target bits include M bits (M is a positive integer greater than or equal to 1). In this case, the target bits may be M least significant bits, M most significant bits, or any M bits in the bits occupied by the PN.

The second STA may transmit the PN to the first STA in a current TXOP by using the second PPDU. Alternatively, if one TXOP is allowed to be preempted only once, the second STA may set, in advance, a PN to be used for preemption of the TXOP. For example, the second STA may notify each STA, including the first STA, of the PN by using a management frame or a trigger frame (for example, a basic trigger frame) in advance.

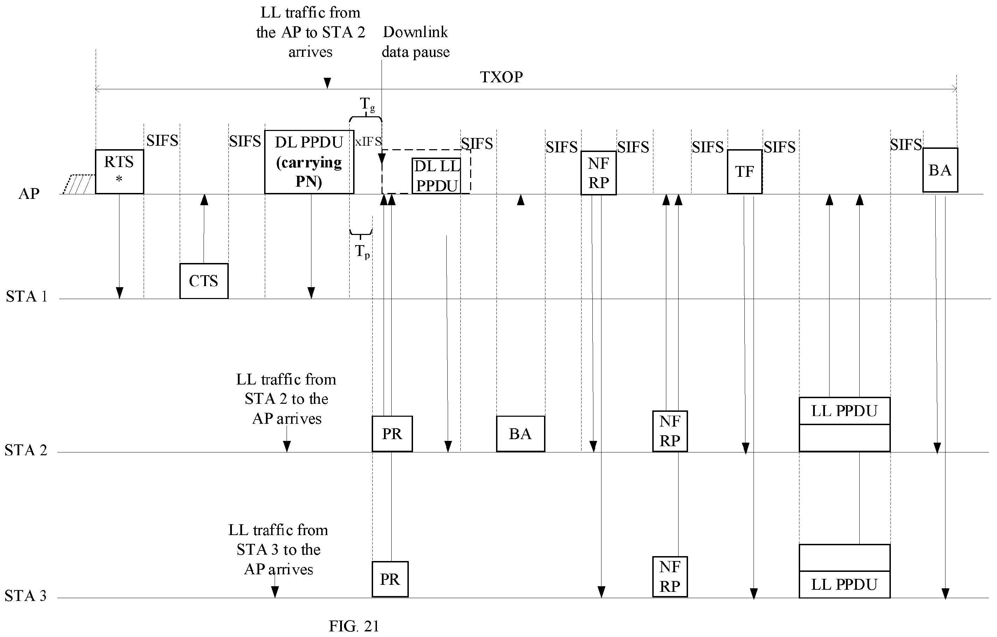

In an example, with reference to FIG. 21, the AP corresponds to the second STA described above, STA 2 or STA 3 corresponds to the first STA described above, and the first information is carried in a PR frame in FIG. 21. Referring to FIG. 21, a data frame transmitted by the AP to STA 1 carries a PN, and STA 2 or STA 3 may transmit a PR frame to the AP based on the PN.

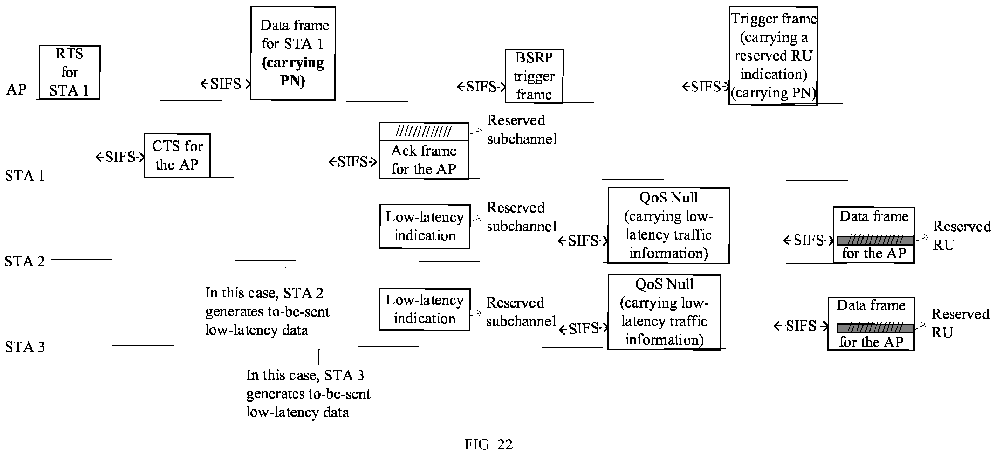

In another example, with reference to FIG. 22, the AP corresponds to the second STA described above, STA 2 or STA 3 corresponds to the first STA described above, and the first information is a low-latency indication in FIG. 22. Referring to FIG. 22, a data frame transmitted by the AP to STA 1 carries a PN, and STA 2 or STA 3 may transmit the low-latency indication to the AP based on the PN. In addition, after receiving QoS Null frames of STA 2 and STA 3, the AP continues to use a trigger frame to carry a PN, so that another STA transmits a low-latency indication by using a reserved subchannel.

A location at which the target bits occupied by the PN is carried in the second PPDU is not specifically limited in embodiments of this application. For example, the second PPDU may include a second MAC frame, and the target bits may be carried in the second MAC frame. For another example, the target bits may be carried in a preamble of the second PPDU. Two possible embodiments are given below.

### Embodiment 1.1: The target bits occupied by the PN are carried in a MAC frame

In Embodiment 1.1, the target bits are carried in the second MAC frame (the second MAC frame is carried in the second PPDU). The second MAC frame may be a data frame, a control frame, or a management frame. With a data frame used as an example, the second MAC frame may be a common downlink data frame, or may be a QoS Null frame. With a control frame used as an example, the second MAC frame may be a trigger frame, for example, a basic trigger frame. The QoS Null frame, the control frame, or the management frame may be a QoS Null frame, a control frame, or a management frame appended to the downlink data frame. That is, the QoS Null frame, the control frame, or the management frame may be carried in a same PPDU (that is, the second PPDU mentioned above) as the downlink data frame.

If the target bits include only a part of the bits occupied by the PN, in some implementations, before the first STA transmits the first PPDU to the second STA, the first STA may further receive a third MAC frame transmitted by the second STA. The third MAC frame may include bits other than the target bits occupied by the PN. The third MAC frame mentioned herein may be a beacon frame, or may be another MAC frame carried in a same PPDU as the second MAC frame. For example, the target bits may include M least significant bits in N bits occupied by the PN (M is a positive integer greater than or equal to 1). Remaining N-M bits (that is, N-M most significant bits occupied by the PN) may be carried in the third MAC frame (for example, carried in a beacon frame for periodic broadcast). The most significant bits change at a relatively low frequency, and the most significant bits are carried in the beacon frame, so that overheads required for indicating the PN can be reduced.

With reference to the accompanying drawings, the following describes, by using examples, a specific location at which the PN is carried in the second MAC frame and/or the third MAC frame.

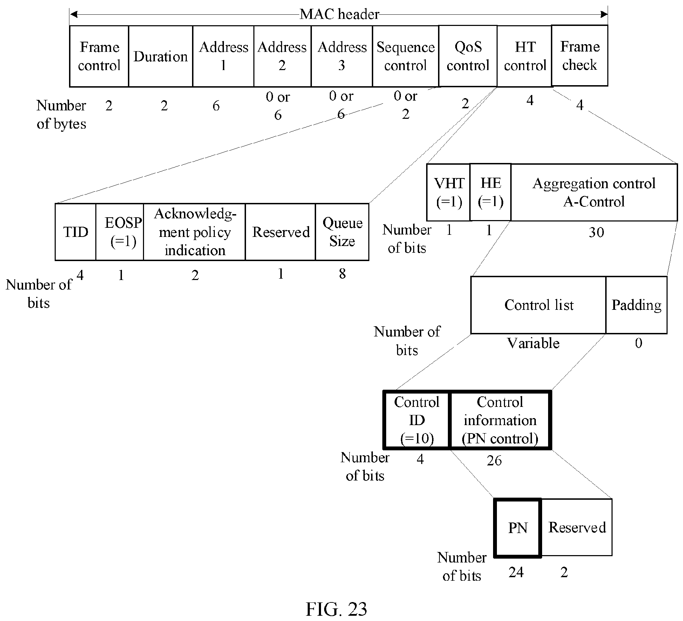

For example, the second MAC frame includes an aggregation control (aggregation control, A-Control) field (the A-Control field may be located in an HT Control field). The PN may be carried in the A-Control field. The second MAC frame may be any type of frame including the A-Control field. For example, the second MAC frame may be a downlink data frame. For another example, the second MAC frame may be a QoS Null frame appended to the downlink data frame (that is, the QoS Null frame and the downlink data frame are carried in a same PPDU). FIG. 23 shows an example of a QoS Null frame. It may be learned from FIG. 23 that the QoS Null frame includes an HT Control field, and the HT Control field includes an A-Control field. The PN may be carried in a control list field of the A-Control field.

Because the PN generally requires 48 bits, 24 bits of the 48 bits may be carried in the second MAC frame (such as a downlink data frame), and the remaining 24 bits of the 48 bits may be carried in the third MAC frame (such as a QoS Null frame appended to the downlink data frame). The PN may be obtained by concatenating bits in the second MAC frame and the third MAC frame. Alternatively, the second STA may add most significant 24 bits (or 22 bits) of the PN to a beacon frame for periodic broadcast, and the most significant 24 bits (or 22 bits) of the PN may remain unchanged in several beacon periods (each beacon period is approximately 100 ms). Then, the second MAC frame (such as the downlink data frame or the QoS Null frame appended to the downlink data frame) carries least significant 24 bits (or 26 bits) of the PN.

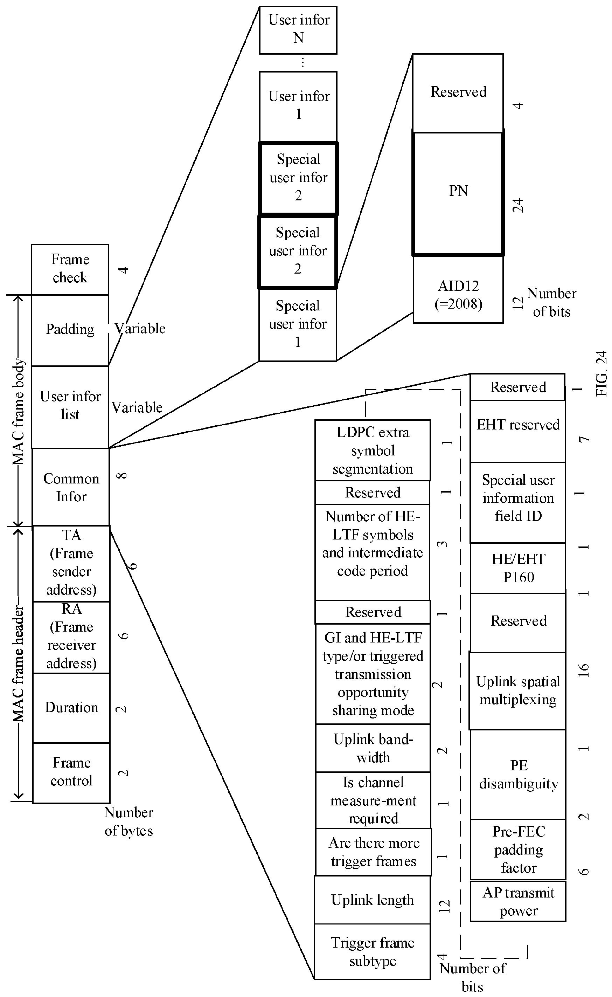

For another example, the second MAC frame may include one or more special user information fields (for example, a special user information 2 field). The target bits may be carried in the one or more special user information fields. The second MAC frame may be any type of frame including the special user information field. For example, the second MAC frame may be a trigger frame (for example, a basic trigger frame). FIG. 24 shows a frame format of a basic trigger frame. As shown in FIG. 24, the basic trigger frame includes a user information list field. The user information list field includes two special user information 2 fields. A value of an AID12 field in the special user information 2 field may be any reserved value ranging from 2008 to 2047. One special user information 2 field may include 24 bits of the PN, and PNs in the two special user information 2 fields may be concatenated to obtain a to-be-used PN value. Alternatively, the basic trigger frame may carry only one special user information 2 field, including the least significant 24 bits (or 28 bits) of the PN, and the most significant 24 bits (or 20 bits) of the PN are carried in a beacon frame for periodic broadcast. Optionally, one bit is selected from reserved bits of common information of the basic trigger frame, to indicate that the basic trigger frame carries one or two special user information 2 fields.

### Embodiment 1.2: The target bits occupied by the PN are carried in a SIG field

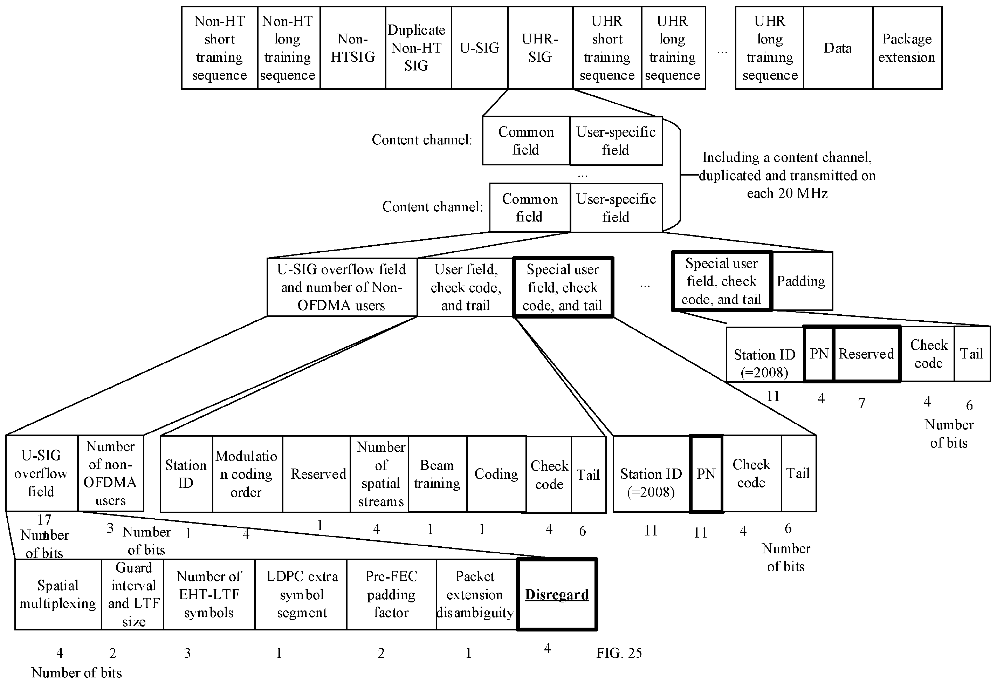

In Embodiment 1.2, the target bits are carried in a SIG field of the second PPDU. FIG. 25 shows a possible format of the second PPDU. It may be learned from FIG. 25 that the second PPDU includes a UHR-SIG field. The target bits may be carried in the UHR-SIG field. Similar to Embodiment 1.1, if the target bits are a part of the bits occupied by the PN, in some implementations, before the first STA transmits the first PPDU to the second STA, the first STA may further receive a fourth MAC frame transmitted by the second STA. The fourth MAC frame may include bits other than the target bits in the bits occupied by the PN. The fourth MAC frame mentioned herein may be a beacon frame. For example, the target bits may include M least significant bits in N bits occupied by the PN (M is a positive integer greater than or equal to 1). Remaining N-M bits (that is, N-M most significant bits occupied by the PN) may be carried in the fourth MAC frame (for example, carried in a beacon frame for periodic broadcast). The most significant bits change at a relatively low frequency, and the most significant bits are carried in the beacon frame, so that overheads required for indicating the PN can be reduced.

In some implementations, the SIG field may include a user specific (user specific) field. The user-specific field may include one or more special user fields. The target bits may be carried in the one or more special user fields. Still using FIG. 25 as an example, the UHR-SIG field includes a user-specific field, and one or more special user fields may be added to the user-specific field (namely, a special user field, a check code, and a tail in FIG. 25) and the target bits may be carried in the special user field (FIG. 25 includes a plurality of PNs, each PN represents a part of bits occupied by the PN, and the plurality of PNs are concatenated to form a complete PN). For example, five special user fields may be added to a user-specific field of a UHR-SIG field in a UHR MU PPDU used for single-user transmission. The first four special user fields of the five special user fields carry 44 bits in the PN, and the fifth special user field carries 4 bits in the PN. Alternatively, only two, three, or four special user fields are added to the user-specific field of the UHR-SIG field, and the special user fields carry the least significant 22 bits, the least significant 33 bits, or the least significant 44 bits of the PN. The most significant 26 bits, the most significant 15 bits, or the most significant 4 bits of the corresponding PN are carried in the fourth MAC frame (for example, carried in a beacon frame for periodic broadcast). Similar processing may be performed in a UHR-SIG field in a UHR MU PPDU for orthogonal frequency division multiple access (orthogonal frequency division multiple access, OFDMA) transmission.

In some implementations, as shown in FIG. 25, the SIG field (for example, the UHR-SIG field) includes a common (common) field. The common field may include fourth information. The fourth information is used to indicate a quantity of the one or more special user fields. For example, the common field may include one or more of fields such as spatial multiplexing, guard interval and LTF size, number of EHT-LTF symbols, LDPC extra symbol segment, pre-FEC padding factor, packet extension disambiguity, and disregard (disregard). The fourth information may be carried in the disregard field. For example, all bit values of the disregard field are ones by default, and a value of one bit may be set to 0, to indicate that the UHR-SIG field carries two, three, four, or five special user fields.

The following describes Embodiment 1 in more detail with reference to specific examples. In the following examples, a STA that transmits a preemption request or a low latency indication is the first STA described above, and an AP is the second STA described above. It should be noted that the examples below are merely intended to help a person skilled in the art understand embodiments of this application, and are not intended to limit embodiments of this application to a specific value or a specific scenario that is exemplified. Apparently, those skilled in the art may make various equivalent modifications or variations based on the examples illustrated, and such modifications or variations also fall within the scope of embodiments of this application.

### Example 1: An AP does not distinguish between STAs that transmit a preemption request and/or a low latency indication

For simplicity, it may be not necessary to distinguish between STAs that transmit a preemption request frame and/or a low latency indication frame. It is sufficient to determine that the preemption request frame and/or the low latency indication frame are/is transmitted by a legitimate STA. Therefore, a MIC carried in the preemption request frame and/or low-latency indication frame may be generated by using a group key (for example, a GTK, an IGTK, a BIGTK, or a CGTK). For a MIC generation method, refer to content in section "MICs of broadcast management frame and multicast management frame".

For example, the preemption request frame or the low-latency indication frame is a CTS frame. In this case, for a format of the preemption request frame or the low-latency indication frame, refer to FIG. 17. An entire frame header (including frame control, duration, and receiver address), PN, and FCS (optional) may be concatenated as a to-be-verified message (denoted as m). The MIC is generated by using a CMAC method. The CMAC is a variant based on the CBC-MAC method. Refer to NIST SP800-38B-CMAC. The group key (for example, a CGTK), m, and a MIC length (128 bits or 256 bits) are respectively used as input parameters K, M, and Tlen for CMAC.

Alternatively, the entire frame header (including frame control, duration, and receiver address), PN, and FCS (optional) are concatenated as AAD, the entire frame header (including frame control, duration, and receiver address), and FCS (optional) are used as a to-be-verified message (denoted as m), and the receiver address and the PN are concatenated as an initial vector. The MIC is generated by using a GMAC method. The GMAC is a special form of a GCM method, and is used to generate a message authentication code for unencrypted data. For details, refer to NIST Special Publication 800-38D. A group key (for example, a CGTK), the initial vector, m, and the AAD are respectively used as input parameters K, IV, P, and A for GMAC.

The MIC may be carried before the FCS field in the preemption request frame and/or the low-latency indication frame, or after the FCS field. For example, if the preemption request frame or the low-latency indication frame or both are newly defined control frames (as shown in FIG. 18) or management frames, the MIC may be carried before the frame check sequence FCS field.

For another example, if the preemption request frame or the low-latency indication frame or both are CTS frames (as shown in FIG. 19), the MIC may be carried after the FCS field. In addition, an FCS2 field may be added after the MIC field. The FCS2 field is used for CRC of an entire frame body, FCS1, and MIC. A calculation method of the FCS2 field is the same as that of the FCS1 field.

The STA may transmit the preemption request frame and/or the low-latency indication frame by using a PPDU occupying an entire operating bandwidth of the STA, or may transmit the preemption request frame and/or the low-latency indication frame by using a PPDU occupying only a part of the operating bandwidth of the STA.

The MIC may be generated based on the PN. The PN is used to prevent a replay attack. That is, an attacker may buffer an intercepted frame and then retransmit it without modification. If there is no anti-replay mechanism, the STA processes the frame as a valid frame. By using the PN, a new MIC can be generated for each transmission. Even if content is the same among frames, different MICs can be generated. The PN is generally an auto-incrementing integer, or may be an integer that is generated randomly each time. In this example, to prevent a conflict, PPDUs carrying preemption request frames and/or low latency indication frames transmitted by STAs at the same time need to be consistent (for example, using a non-HT PPDU, a non-HT duplicate PPDU, or a TB PPDU), and preamble consistency needs to be ensured. In addition, the same MCS and NSS need to be predefined or negotiated in advance, and the AP needs to transmit a same PN value to the STAs in advance. The AP may indicate the PN value in a previous downlink frame and/or in a SIG field of a downlink PPDU, as shown in FIG. 21 and FIG. 22.

The PN may be carried in an A-Control field in an HT Control field in a frame header of a downlink data frame. Alternatively, the PN may be carried in an A-Control field in an HT Control field in a frame header of a QoS Null frame (as shown in FIG. 23) appended to the downlink data frame.

Because the PN generally requires 48 bits, a 24-bit PN carried in the downlink data frame and a PN carried in the appended QoS Null frame may be concatenated to obtain a to-be-used PN value. Alternatively, the AP may add most significant 24 bits (or 22 bits) of the PN to a beacon frame for periodic broadcast, the most significant 24 bits (or 22 bits) of the PN may remain unchanged in several beacon periods (each beacon period is approximately 100 ms), and the downlink data frame and/or the appended QoS Null frame carry least significant 24 bits (or 26 bits) of the PN.

Alternatively, in some implementations, the PN may be carried in a newly defined management frame or control frame (for example, a basic trigger frame) appended to the downlink data frame. As shown in FIG. 24, two special user information 2 fields may be carried in the basic trigger frame. A value of an AID12 field in the special user information 2 field is any reserved value ranging from 2008 to 2047. One special user information 2 field includes 24 bits of the PN, and PNs in the two special user information 2 fields may be concatenated to obtain a to-be-used PN value. Alternatively, the basic trigger frame may carry only one special user information 2 field, including the least significant 24 bits (or 28 bits) of the PN, and the most significant 24 bits (or 20 bits) of the PN are carried in a beacon frame for periodic broadcast. Optionally, one bit is selected from reserved bits of common information of the basic trigger frame, to indicate that the basic trigger frame carries one or two special user information 2 fields.

Alternatively, in some implementations, the PN may be carried in a UHR-SIG field of a downlink PPDU. As shown in FIG. 25, five special user fields are added to the user-specific field of the UHR-SIG field in the UHR MU PPDU for single-user transmission, the first four special user fields carry 44 bits in the PN, and the fifth special user field carries four bits in the PN. Alternatively, only two, three, or four special user fields are added to the user-specific field of the UHR-SIG field, and the special user fields carry the least significant 22 bits, the least significant 33 bits, or the least significant 44 bits of the PN. The most significant 26 bits, the most significant 15 bits, or the most significant 4 bits of the corresponding PN are carried in a beacon frame for periodic broadcast. Optionally, one bit in the disregard field in the common field of the UHR-SIG field may be set to 0, to indicate that the UHR-SIG field carries two, three, four, or five special user fields. Similar processing may also be performed in the UHR-SIG field in the UHR MU PPDU used for OFDMA transmission.

Alternatively, it may be specified that one TXOP is allowed to be preempted only once. In this case, the PN to be used for preemption in the TXOP may be set in advance. For example, each STA may be notified of the PN by using a management frame or a trigger frame (for example, a basic trigger frame) in advance.

### Example 2: An AP identifies a STA that transmits a preemption request and/or a low latency indication

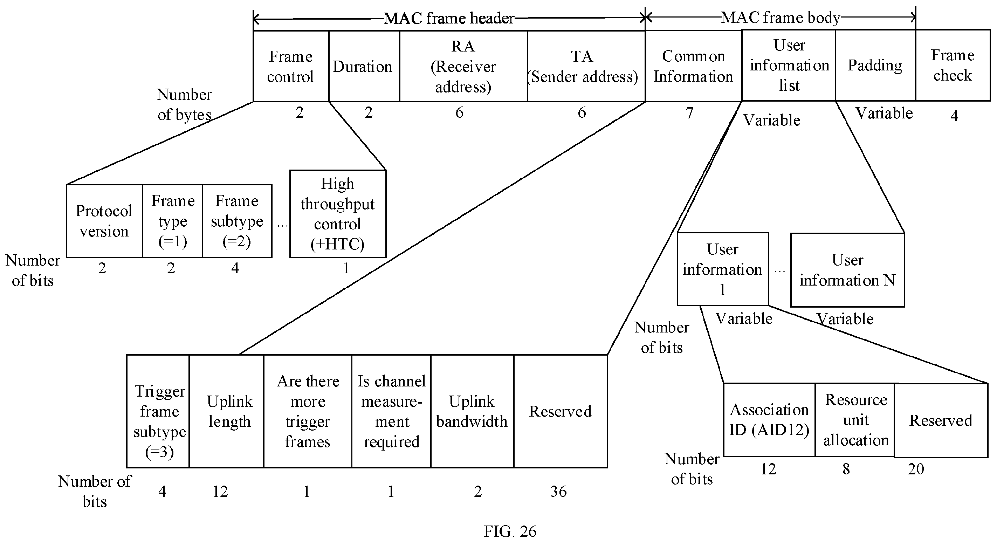

To improve efficiency, the AP identifies a specific STA that transmits a preemption request frame and/or a low-latency indication frame. Each STA needs to transmit, in a pre-allocated or negotiated different frequency domain, time domain, and/or space domain, a TB PPDU that carries the preemption request frame and/or the low-latency indication frame. Therefore, the AP needs to indicate, in an initial control frame (initial control frame), the following content to the STA: an RU or MRU to be used to transmit a TB PPDU carrying the preemption request frame and/or the low-latency indication frame. The initial control frame is generally an MU-RTS trigger frame (as shown in FIG. 26). The initial control frame may be a 1^{st} frame transmitted when the AP obtains the TXOP, or may be an indication frame transmitted when the AP allows the STA to initiate preemption in the TXOP.

A MIC may be carried before an FCS field in the preemption request frame and/or the low-latency indication frame, or after the FCS field. For details, refer to the description in Example 1.

Because TB PPDUs that are transmitted by STAs and that carry preemption request frames and/or low-latency indication frames do not conflict with each other, content of the preemption request frames and/or the low-latency indication frames carried in the TB PPDUs may be the same or different. The MIC carried in the preemption request frame and/or the low latency indication frame may be generated by using a group key (for example, a GTK, an IGTK, a BIGTK, or a CGTK), or may be generated by using a pairwise key (for example, a PTK or a CPTK). For a MIC generation manner, refer to Example 1.

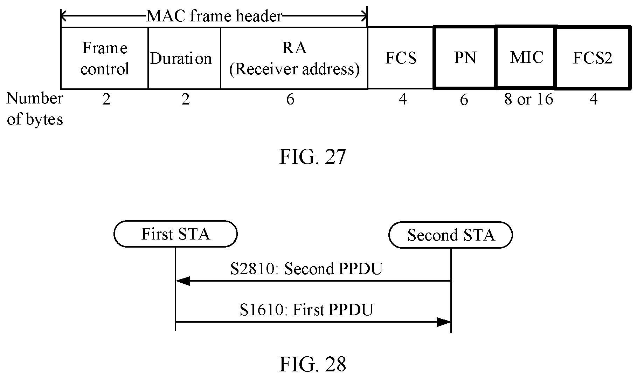

In Example 2, PNs used by the STAs to generate MICs may be the same or may be different. Therefore, the PNs used by the STAs may be indicated by the AP, as in Example 1. Alternatively, the STAs may use respective PNs, and add the respective PNs to preemption request frames and/or low-latency indication frames (for example, CTS frames, as shown in FIG. 27).

### Embodiment 2: The second information is carried in a preamble of a PPDU

In Embodiment 2, the second information is not carried in the first MAC frame, but is carried in a preamble of the first PPDU. For example, the second information may be carried in an LTF of the preamble. In an example, the second information is a secure LTF (secure-LTF) in the first PPDU. The second information may be used to determine (or check) legitimacy of a STA that transmits the first PPDU. Alternatively, the second information may be used to determine (or check) legitimacy of the first PPDU.

Secure-LTF may be generated or verified based on a key K and a sequence number C (the sequence number may be 16 bits, 24 bits, 32 bits, or 48 bits). A generation or verification manner of Secure-LTF is not specifically limited in embodiments of this application.

For example, at a transmit end, the first STA generates a random sequence R by using a key K and a sequence number C. Then, the first STA performs phase randomization adjustment on tones of each spatial stream (spatial stream) by using the random sequence R, and performs quadrature amplitude modulation (quadrature amplitude modulation, QAM) adjustment on each tone of each LTF symbol on each spatial stream by using the random sequence R.

At a receive end, the second STA generates the same random sequence R by using the same key K and the same C. Then, the second STA obtains an expected secure-LTF by using the random sequence R. Next, the second STA compares the expected secure-LTF with a received secure-LTF. If the expected secure-LTF has a high signal correlation with the received secure-LTF (for example, the signal correlation exceeds a predefined threshold), the verification succeeds.

For example, a specific secure-LTF generation algorithm is described in detail below.

LTF-Key-Seed = HMAC-Hash(K, "Preemption LTF key seed"). In the formula, HMAC-Hash(key, message) indicates a hash function in a form of a hash-based message authentication code (hash-based message authentication code, HMAC). K is a key. "message" indicates content of a message to be authenticated. HMAC indicates a key-based hash method used for message authentication (refer to the IETF RFC 2104 standard). "Hash" indicates a specific hash function. For example, HMAC-SHA-256 (K, "Preemption LTF key seed") indicates that a SHA-256 (a hash function with an output length of 256 bits) algorithm is used, with K used as a key and "Preemption LTF key seed" used as content of a to-be-authenticated message.

LTF-Key-Material = KDF-Hash-Length(LTF-Key-Seed, "Preemption LTF Expansion", C). In the formula, KDF-Hash-Length(K, Label, Context) indicates a pseudo-random method for key derivation. "Hash" indicates a specific hash function. "Length" indicates a quantity of bits of a derived key. K is a key. "Label" indicates a purpose of the derived key. "Context" indicates a context used for derivation. For example, KDF-SHA-256 (LTF-Key-Seed, "Preemption LTF Expansion", C) indicates that a SHA-256 (a hash function with an output length of 256 bits) algorithm is used, with LTF-Key-Seed used as a key, the string "Preemption LTF Expansion" used to indicate a purpose of a derived key, and C used to indicate a context for derivation. C is a sequence number. The AP and STA exchange a sequence number before each preemption.

LTF-Key = L(LTF-Key-Material, 0, 128) means extracting 128 bits of data starting from a zeroth bit of LTF-Key-Material.

Input-Value (16 octets) = LTF-ID (6 octets) ∥ Ctr (6 octets) ∥ block counter (4 octets), where "∥" indicates that two byte streams are concatenated, LTF-ID is a 6-byte identifier, Ctr is a string of a sequence number C (if a length is less than 6 bytes, a header may be filled with escape characters "\0"), and "block counter" is a string representing a block counter used during encryption (initialized to 0 each time encryption begins, and incremented by 1 for each block of data output during encryption).

LTF-ID may use a basic service set identity (basic service set identity, BSSID), that is, an identity of a current BSS (generally a MAC address of the AP, with a length of 6bytes). Alternatively, LTF-ID may use a MAC address of the first STA. Alternatively, LTF-ID may be a 6-byte random sequence distributed by the second STA in advance and shared by a plurality of STAs.

S = AES-128-CTR(LTF-Key, Input-Value, block counter). In the formula, AES-128-CTR is an AES, using a counter mode, with an output length of 128 bits. For details, refer to the FIPS 197 standard. LTF-Key is an encryption key, and Input-Value is an original text to be encrypted. Each time 128 bits are output, the block counter increases by 1, and Input-Value is updated accordingly. The random sequence R described above may include at least one S.

In some implementations, the second STA needs to indicate a sequence number (similar to the PN in Embodiment 1) in advance, so that the first STA generates a secure-LTF. Referring to FIG. 28, before step S1610 is performed, the first STA receives a second PPDU transmitted by the second STA (step S2810). The second PPDU includes target bits, and the target bits are a part or all of bits occupied by the sequence number. For example, the target bits are a part of the bits occupied by the sequence number, and the target bits include M bits (M is a positive integer greater than or equal to 1). In this case, the target bits may be M least significant bits, M most significant bits, or any M bits in the bits occupied by the sequence number.

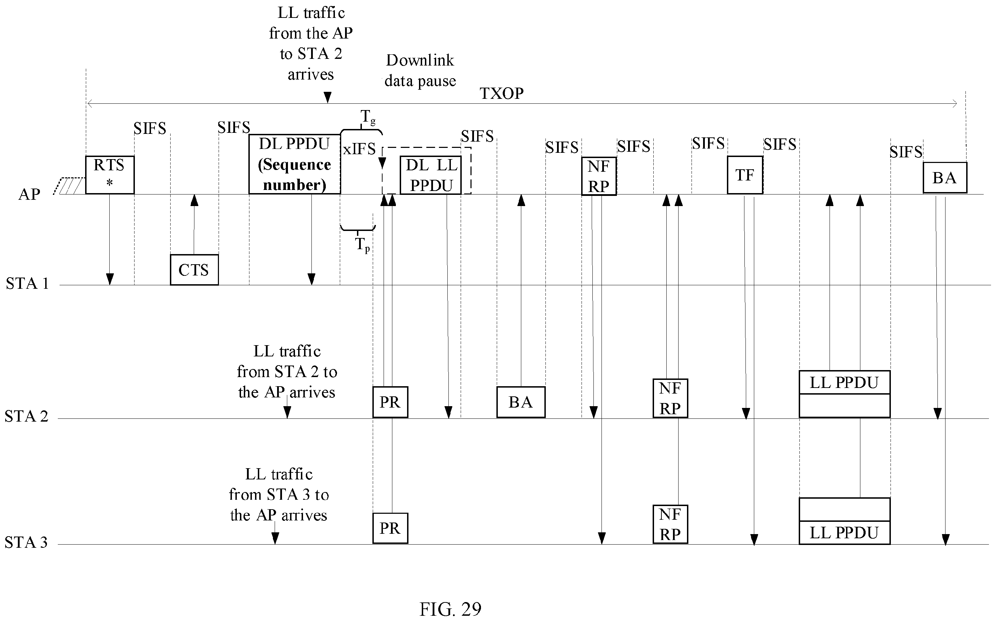

In an example, with reference to FIG. 29, the AP corresponds to the second STA described above, STA 2 or STA 3 corresponds to the first STA described above, and the first information is carried in a PR frame in FIG. 29. Referring to FIG. 29, a data frame transmitted by the AP to STA 1 carries a sequence number, and STA 2 or STA 3 may transmit a PR frame to the AP based on the sequence number.

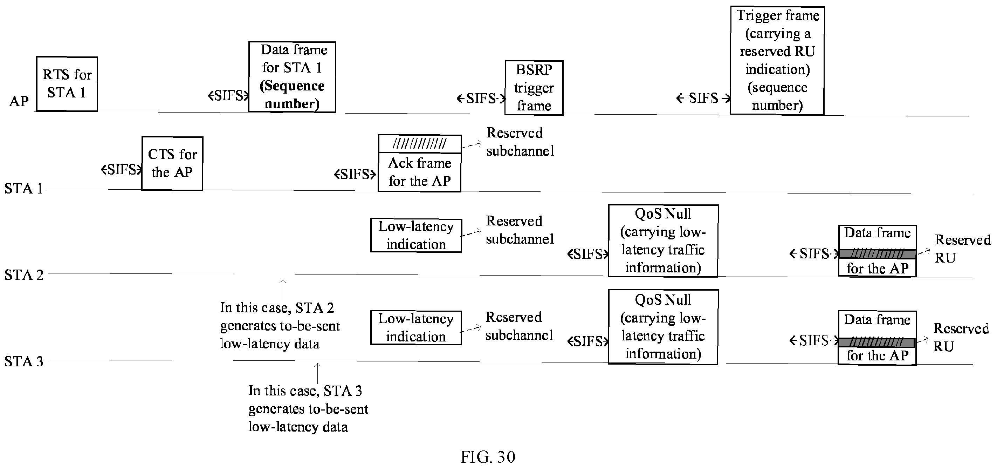

In an example, with reference to FIG. 30, the AP corresponds to the second STA described above, STA 2 or STA 3 corresponds to the first STA described above, and the first information is a low-latency indication in FIG. 30. Referring to the FIG. 30, a data frame transmitted by the AP to STA 1 carries a sequence number, and STA 2 or STA 3 may transmit a low latency indication to the AP based on the sequence number. In addition, after receiving QoS null frames of STA 2 and STA3, the AP continues to use a trigger frame to carry a sequence number, so that another STA transmits a low-latency indication by using a reserved subchannel.

A location at which the target bits occupied by the sequence number is carried in the second PPDU is not specifically limited in embodiments of this application. For example, the second PPDU may include a second MAC frame, and the target bits may be carried in the second MAC frame. For another example, the target bits may be carried in a preamble of the second PPDU. Two possible embodiments are given below.

### Embodiment 2.1: The target bits occupied by the sequence number are carried in a MAC frame

In Embodiment 2.1, the target bits are carried in the second MAC frame (the second MAC frame is carried in the second PPDU). The second MAC frame may be a data frame, a control frame, or a management frame. With a data frame used as an example, the second MAC frame may be a regular downlink data frame, or may be a QoS Null frame. With a control frame used as an example, the second MAC frame may be a trigger frame, for example, a basic trigger frame. The QoS Null frame, the control frame, or the management frame may be a QoS Null frame, a control frame, or a management frame appended to the downlink data frame. That is, the QoS Null frame, the control frame, or the management frame may be carried in a same PPDU (that is, the second PPDU mentioned above) as the downlink data frame.

If the target bits are a part of the bits occupied by the sequence number, in some implementations, before the first STA transmits the first PPDU to the second STA, the first STA may further receive a third MAC frame transmitted by the second STA. The third MAC frame may include bits other than the target bits in the bits occupied by the sequence number. The third MAC frame mentioned herein may be a beacon frame, or may be a MAC frame carried in a same PPDU as the second MAC frame. For example, the target bits may include M least significant bits in N bits occupied by the sequence number (M is a positive integer greater than or equal to 1). Remaining N-M bits (that is, N-M most significant bits occupied by the sequence number) may be carried in the third MAC frame (for example, carried in a beacon frame for periodic broadcast). The most significant bits change at a relatively low frequency, and the most significant bits are carried in the beacon frame, so that overheads required for indicating the sequence number can be reduced.

With reference to the accompanying drawings, the following describes, by using examples, a specific location at which the sequence number is carried in the second MAC frame and/or the third MAC frame.

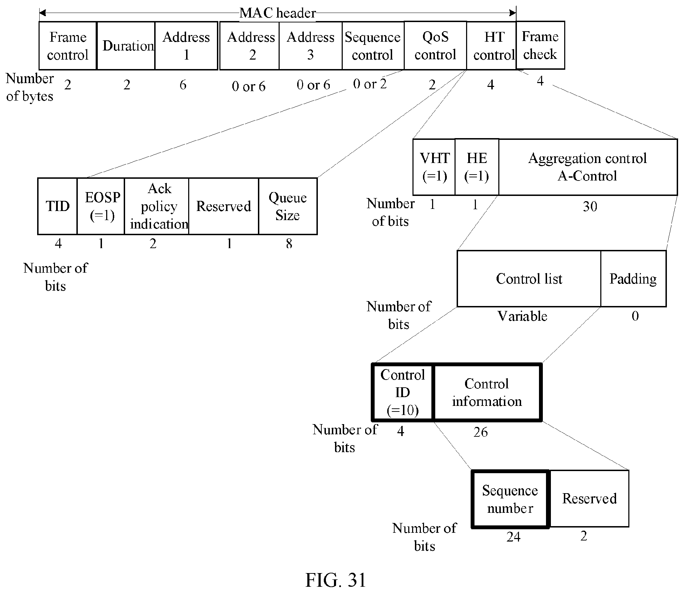

For example, the second MAC frame includes an A-Control field. The sequence number may be carried in the A-Control field (the A-Control field may be located in an HT Control field). In this example, the second MAC frame may be any type of frame including the A-Control field. For example, the second MAC frame may be a downlink data frame. For another example, the second MAC frame may be a QoS Null frame appended to the downlink data frame (that is, the QoS Null frame and the downlink data frame are both carried in the second PPDU). FIG. 31 shows an example of a QoS Null frame. It may be learned from FIG. 31 that the QoS Null frame includes an HT Control field, and the HT Control field includes an A-Control field. The sequence number may be carried in a control list of the A-Control field.

Because the sequence number may occupy a large quantity of bits (for example, 48 bits, where 48 bits are used as an example in the following description), 24 bits of the 48 bits may be carried in the second MAC frame (a downlink data frame), and the remaining 24 bits of the 48 bits may be carried in the third MAC frame (such as a QoS Null frame appended to the downlink data frame). The sequence number may be obtained by concatenating bits in the second MAC frame and the third MAC frame. Alternatively, the AP may add most significant 24 bits (or 22 bits) of the sequence number to a beacon frame for periodic broadcast, and the most significant 24 bits (or 22 bits) of the sequence number may remain unchanged in several beacon periods (each beacon period is approximately 100 ms). Then, the second MAC frame (such as the downlink data frame or the QoS Null frame appended to the downlink data frame) carries least significant 24 bits (or 26 bits) of the sequence number.

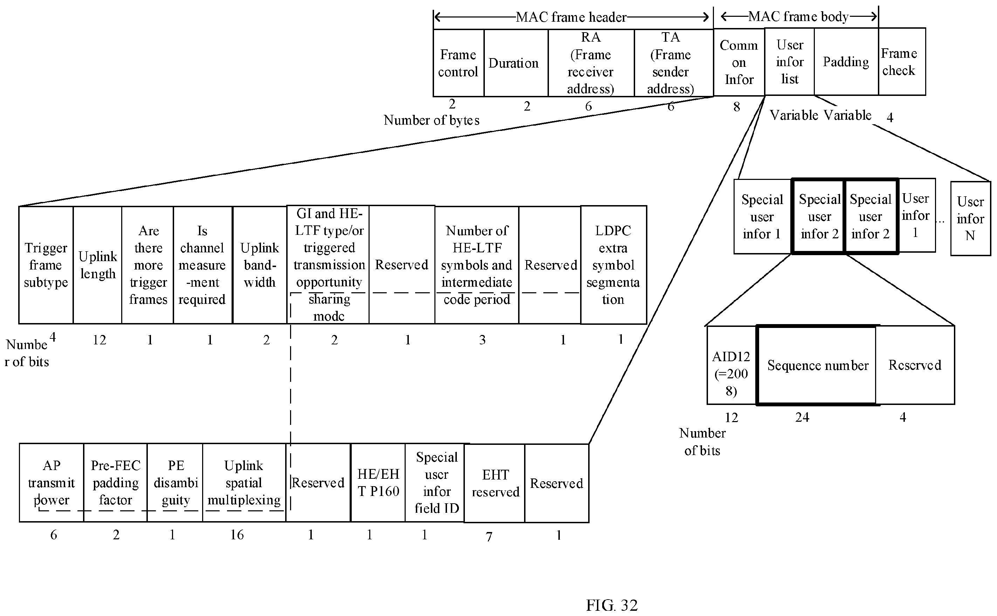

For another example, the second MAC frame may include one or more special user information fields (for example, a special user information 2 field). The target bits may be carried in the one or more special user information fields. The second MAC frame may be any type of frame including the special user information field. For example, the second MAC frame may be a trigger frame (for example, a basic trigger frame). FIG. 32 shows a frame format of a basic trigger frame. As shown in FIG. 32, the basic trigger frame includes a user information list field. The user information list field includes two special information user 2 fields. A value of an AID12 field in the special user information 2 field may be any reserved value ranging from 2008 to 2047. One special user information 2 field may include 24 bits of the sequence number, and sequence numbers in the two special user information 2 fields may be concatenated to obtain a to-be-used sequence number value. Alternatively, the basic trigger frame may carry only one special user information 2 field, including the least significant 24 bits (or 28 bits) of the sequence number, and the most significant 24 bits (or 20 bits) of the sequence number are carried in a beacon frame for periodic broadcast. Optionally, one bit is selected from reserved bits of common information of the basic trigger frame, to indicate that the basic trigger frame carries one or two special user information 2 fields.

### Embodiment 2.2: The target bits occupied by the sequence number are carried in SIG

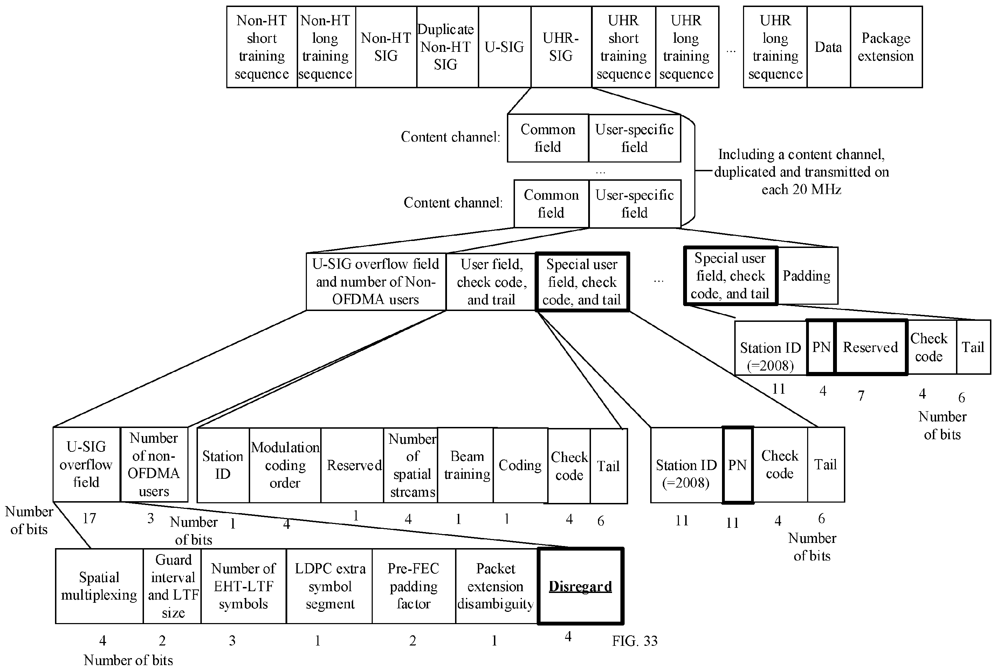

In Embodiment 2.2, the second PPDU includes a SIG field, and the target bits are carried in the SIG field. FIG. 33 shows a possible format of a second PPDU. It may be learned from FIG. 33 that the second PPDU includes a UHR-SIG field, and the target bits may be carried in the UHR-SIG field. If the target bits are a part of the bits occupied by the sequence number, in some implementations, before the first STA transmits the first PPDU to the second STA, the first STA may further receive a fourth MAC frame transmitted by the second STA. The fourth MAC frame may include bits other than the target bits in the bits occupied by the sequence number. The fourth MAC frame mentioned herein may be a beacon frame. For example, the target bits may include M least significant bits in N bits occupied by the sequence number (M is a positive integer greater than or equal to 1). Remaining N-M bits (that is, N-M most significant bits occupied by the sequence number) may be carried in the fourth MAC frame (for example, carried in a beacon frame for periodic broadcast). The most significant bits change at a relatively low frequency, and the most significant bits are carried in the beacon frame, so that overheads required for indicating the sequence number can be reduced.

In some implementations, the SIG field may include a user specific (user specific) field. The user-specific field may include one or more special user fields. The target bits may be carried in the one or more special user fields. Using FIG. 33 as an example, the UHR-SIG field includes a user-specific field, and one or more special user fields may be added to the user-specific field (namely, a special user field, a check code, and a tail in FIG. 33) and the target bits may be carried in the special user field (FIG. 33 includes a plurality of sequence numbers, each sequence number represents a part of bits occupied by the sequence number, and the plurality of sequence numbers are concatenated to form a complete sequence number). For example, five special user fields may be added to a user-specific field of a UHR-SIG field in a UHR MU PPDU used for single-user transmission. The first four special user fields of the five special user fields carry 44 bits in the sequence number, and the fifth special user field carries 4 bits in the sequence number. Alternatively, only two, three, or four special user fields are added to the user-specific field of the UHR-SIG field, and the special user fields carry the least significant 22 bits, the least significant 33 bits, or the least significant 44 bits of the sequence number. The most significant 26 bits, the most significant 15 bits, or the most significant 4 bits of the corresponding sequence number are carried in a beacon frame for periodic broadcast. Similar processing may also be performed in the UHR-SIG field in the UHR MU PPDU used for OFDMA transmission.

In some implementations, as shown in FIG. 33, the SIG field (for example, the UHR-SIG field) includes a common (common) field. The common field may include fourth information. The fourth information is used to indicate a quantity of the one or more special user fields. For example, the common field may include one or more of fields such as spatial multiplexing, guard interval and LTF size, number of EHT-LTF symbols, LDPC extra symbol segment, pre-FEC padding factor, packet extension disambiguity, disregard. The fourth information may be carried in the disregard field. For example, all bit values of the disregard field are ones by default, and a value of one bit may be set to 0, to indicate that the UHR-SIG field carries two, three, four, or five special user fields.

The following describes Embodiment 2 in more detail with reference to specific examples. In the following examples, a STA that transmits a preemption request or a low latency indication is the first STA described above, and an AP is the second STA described above. It should be noted that the examples below are merely intended to help a person skilled in the art understand embodiments of this application, and are not intended to limit embodiments of this application to a specific value or a specific scenario that is exemplified. Apparently, those skilled in the art may make various equivalent modifications or variations based on the examples illustrated, and such modifications or variations also fall within the scope of embodiments of this application.

### Example 3: An AP does not distinguish between STAs that transmits a preemption request and/or a low latency indication

To prevent a conflict, PPDUs that are transmitted by STAs, including the first STA, at the same time, and that carry the first information (used to preempt a TXOP of the AP or indicate to-be-transmitted low-latency data) should be consistent. To ensure consistency of PPDUs transmitted by the STAs, the STAs may use a TB PPDU to ensure that preambles are consistent, the STAs need to use a same MCS and NSS, and quantities of LTF symbols generated by the STAs need to be consistent. The quantities of MCS, NSS, and LTF symbols used by the STAs may be determined in a predefined or pre-negotiated manner. A QAM value of each tone of each LTF symbol generated by each STA also needs to be consistent. Therefore, secure-LTF needs to be generated by using a same group key (for example, a GTK, an IGTK, a BIGTK, or a CGTK). Because bandwidths occupied by PPDUs that are transmitted by the STAs and used to carry the first information may be different, quantities of tones of secure-LTF corresponding to the PPDUs transmitted by the STAs may also be different. In this case, a maximum bandwidth of the PPDU may be predefined (for example, set to 20 MHz) or negotiated in advance (for example, a default value is a bandwidth of the preamble downlink PPDU transmitted by the AP), and then, each STA generates and uses a same random sequence R based on a quantity of tones for the maximum bandwidth. If a bandwidth of a specific STA is relatively small, the STA may discard a part of the random sequence R. For example, a specific STA actually transmits two secure-LTF symbols, and each secure-LTF symbol occupies 122 tones. If a predefined or pre-negotiated maximum bandwidth is 80 MHz (corresponding to 488 tones occupied by each secure-LTF), the STA may use the first x bits (for phase adjustment of spatial streams) of the random sequence R and the subsequent 122 bits (for tone QAM value adjustment) in a 1^{st} secure-LTF symbol. Then, the STA may discard the subsequent 366 bits of the random sequence R, and use the subsequent 122 bits of the random sequence R in a 2^{nd} secure-LTF symbol.

The AP may indicate a sequence number C in a previous downlink frame and/or in a downlink PPDU. A manner of indicating the sequence number C is similar to the manner of indicating the PN in Example 1, and details are not described herein again.

### Example 4: An AP identifies a STA that transmits a preemption request and/or a low latency indication

To improve efficiency, the AP may identify a specific STA that transmits a preemption request and/or a low-latency indication. In this case, each STA needs to transmit, in a pre-allocated or negotiated different frequency domain and/or time domain, a TB PPDU that carries the preemption request and/or the low-latency indication. Correspondingly, each STA transmits secure-LTF in a different pre-negotiated frequency domain and/or time domain.

Because there is no conflict, secure-LTF may be generated by using a group key (for example, a GTK, an IGTK, a BIGTK, or a CGTK), or may be generated by using a pairwise key (for example, a PTK or a CPTK).

The AP may indicate a sequence number C in a previous downlink frame and/or in a SIG field of a downlink PPDU. A manner of indicating the sequence number C is similar to the manner of indicating the PN in Example 1, and details are not described herein again.

The first PPDU mentioned in each of the foregoing embodiments may occupy a part of an operating bandwidth of the first STA, or may occupy all of the operating bandwidth of the first STA. In other words, the first STA may transmit the first information by using a PPDU occupying all of the operating bandwidth of the first STA, or may transmit the first information by using a PPDU occupying only a part of the operating bandwidth of the first STA. If the second information is secure-LTF, and the first PPDU occupies all of the operating bandwidth of the first STA, the secure-LTF also occupies all of the operating bandwidth of the first STA; or if the second information is secure-LTF, and the first PPDU occupies a part of the operating bandwidth of the first STA, the secure-LTF also occupies a corresponding part of the operating bandwidth of the first STA.

It may be learned from the content of the section "Protection of MAC frame header and control frame" that protection of a control frame having a frame body is considered in the related art. However, protection of a control frame without a frame body is not considered in the related art. In many scenarios, if a control frame without a frame body is not protected, a system may be exposed to attacks. Therefore, the method provided by the foregoing embodiments may be applied to the protection of a control frame without a frame body. The control frame without a frame body mentioned herein may include, for example, one or more of the following: RTS frame, CTS frame, contention-free end (contention free-end, CF-End) frame, acknowledgment (acknowledgment, Ack) frame, or power saving poll (power save-poll, PS-Poll) frame. In an example, the MIC field described above may be added to the control frame. Alternatively, LTF of a PPDU that carries the control frame may be set to secure-LTF. For detailed description, refer to the foregoing description, and details are not described herein again.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

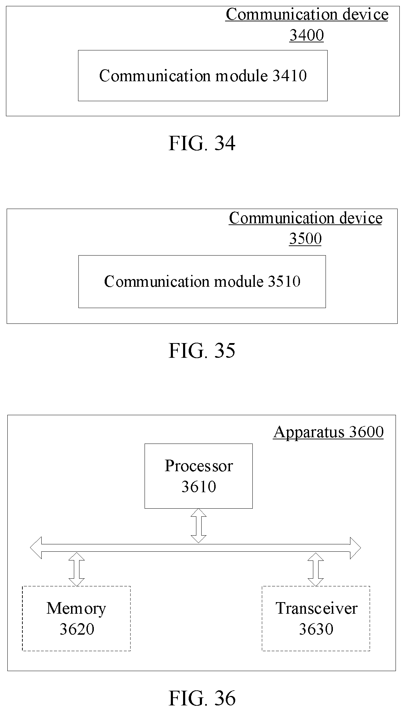

FIG. 34 is a schematic structural diagram of a communication device according to an embodiment of this application. The communication device 3400 shown in FIG. 34 may be the first STA mentioned in the foregoing embodiments. The communication device 3400 may include a first communications module 3410. The first communications module 3410 is configured to transmit a first PPDU to a second STA, where the first PPDU includes first information and second information, the first information is used to preempt a transmission opportunity TXOP of the second STA and/or indicate that the first STA includes to-be-transmitted low-latency data, and the second information is used to determine legitimacy of the first STA.

In some implementations, the second information is generated based on a group key or a pairwise key.

In some implementations, the group key includes one or more of the following: a GTK, an IGTK, a BIGTK, or a CGTK.

In some implementations, the first PPDU occupies a part or all of an operating bandwidth of the first STA.

In some implementations, the first PPDU is used to carry a first MAC frame, and the second information is a MIC in the first MAC frame.

In some implementations, the first MAC frame includes a first FCS field, and a field corresponding to the MIC is located before or after the first FCS field.

In some implementations, the field corresponding to the MIC is located after the first FCS field, the first MAC frame further includes a second FCS field, and the second FCS field is located after the field corresponding to the MIC.

In some implementations, the second information is a secure LTF in the first PPDU.

In some implementations, the second information is generated based on a first parameter; and the second information is a MIC, and the first parameter is a packet number; or the second information is a secure LTF, and the first parameter is a sequence number.

In some implementations, the communication device 3400 further includes: a second communication module, configured to: before the first STA transmits the first PPDU to the second STA, receive a second PPDU transmitted by the second STA, where the second PPDU includes target bits, and the target bits are a part or all of bits occupied by the first parameter.

In some implementations, the second PPDU is used to carry a second MAC frame, and the second MAC frame includes the target bits.

In some implementations, the second MAC frame includes an aggregation control field, and the target bits are carried in the aggregation control field.

In some implementations, the second MAC frame includes one or more special user information fields, and the target bits are carried in the one or more special user information fields.

In some implementations, the second MAC frame includes a common information field, the common information field includes third information, and the third information is used to indicate a quantity of the one or more special user information fields.

In some implementations, the second MAC frame is a trigger frame.

In some implementations, the second MAC frame is a data frame, a control frame, or a management frame.

In some implementations, the communication device 3400 further includes: a third communication module, configured to: before the first STA transmits the first PPDU to the second STA, receive a third MAC frame transmitted by the second STA, where the third MAC frame includes bits other than the target bits in the bits occupied by the first parameter.

In some implementations, the third MAC frame is a beacon frame; or both the third MAC frame and the second MAC frame are carried in the second PPDU.

In some implementations, the target bits include M least significant bits in the bits occupied by the first parameter, and M is a positive integer greater than or equal to 1.

In some implementations, the second PPDU includes a SIG field, and the target bits are carried in the SIG field.

In some implementations, a user-specific field of the SIG field includes one or more special user fields, and the target information is carried in the one or more special user fields.

In some implementations, the SIG field includes a common field, the common field includes fourth information, and the fourth information is used to indicate a quantity of the one or more special user fields.

In some implementations, the common field includes a disregard field, and the fourth information is carried in the disregard field.

In some implementations, the communication device 3400 further includes: a fourth communication module, configured to: before the first STA transmits the first PPDU to the second STA, receive a fourth MAC frame transmitted by the second STA, where the fourth MAC frame includes bits other than the target bits in the bits occupied by the first parameter.

In some implementations, the fourth MAC frame is a beacon frame.

In some implementations, the target bits include M least significant bits in the bits occupied by the first parameter, and M is a positive integer greater than or equal to 1.

In some implementations, the second STA is an access point.

FIG. 35 is a schematic structural diagram of a communication device according to an embodiment of this application. The communication device 3500 shown in FIG. 35 may be the second STA mentioned in the foregoing embodiments. The communication device 3500 may include a first communications module 3510. The first communications module 3510 is configured to receive a first physical protocol data unit PPDU transmitted by a first STA, where the first PPDU includes first information and second information, the first information is used to preempt a transmission opportunity TXOP of the second STA and/or indicate that the first STA includes to-be-transmitted low-latency data, and the second information is used to determine legitimacy of the first STA.

In some implementations, the second information is generated based on a group key or a pairwise key.

In some implementations, the group key includes one or more of the following: a GTK, an IGTK, a BIGTK, or a CGTK.

In some implementations, the first PPDU occupies a part or all of an operating bandwidth of the first STA.

In some implementations, the first PPDU is used to carry a first MAC frame, and the second information is a MIC in the first MAC frame.

In some implementations, the first MAC frame includes a first FCS field, and a field corresponding to the MIC is located before or after the first FCS field.

In some implementations, the field corresponding to the MIC is located after the first FCS field, the first MAC frame further includes a second FCS field, and the second FCS field is located after the field corresponding to the MIC.

In some implementations, the second information is a secure LTF in the first PPDU.

In some implementations, the second information is generated based on a first parameter; and the second information is a MIC, and the first parameter is a packet number; or the second information is a secure LTF, and the first parameter is a sequence number.

In some implementations, the communication device 3500 further includes: a second communication module, configured to: before the second STA receives the first PPDU transmitted by the first STA, transmit a second PPDU to the first STA, where the second PPDU includes target bits, and the target bits are a part or all of bits occupied by the first parameter.

In some implementations, the second PPDU is used to carry a second MAC frame, and the second MAC frame includes the target bits.

In some implementations, the second MAC frame includes an aggregation control field, and the target bits are carried in the aggregation control field.

In some implementations, the second MAC frame includes one or more special user information fields, and the target bits are carried in the one or more special user information fields.

In some implementations, the second MAC frame includes a common information field, the common information field includes third information, and the third information is used to indicate a quantity of the one or more special user information fields.

In some implementations, the second MAC frame is a trigger frame.

In some implementations, the second MAC frame is a data frame, a control frame, or a management frame.

In some implementations, the communication device 3500 further includes: a third communication module, configured to: before the second STA receives the first PPDU transmitted by the first STA, transmit a third MAC frame to the second STA, where the third MAC frame includes bits other than the target bits in the bits occupied by the first parameter.

In some implementations, the third MAC frame is a beacon frame; or both the third MAC frame and the second MAC frame are carried in the second PPDU.

In some implementations, the target bits include M least significant bits in the bits occupied by the first parameter, and M is a positive integer greater than or equal to 1.

In some implementations, the second PPDU includes a SIG field, and the target bits are carried in the SIG field.

In some implementations, a user-specific field of the SIG field includes one or more special user fields, and the target information is carried in the one or more special user fields.

In some implementations, the SIG field includes a common field, the common field includes fourth information, and the fourth information is used to indicate a quantity of the one or more special user fields.

In some implementations, the common field includes a disregard field, and the fourth information is carried in the disregard field.

In some implementations, the communication device 3500 further includes: a fourth communication module, configured to: before the second STA receives the first PPDU transmitted by the first STA, transmit a fourth MAC frame to the first STA, where the fourth MAC frame includes bits other than the target bits in the bits occupied by the first parameter.
In some implementations, the fourth MAC frame is a beacon frame.

In some implementations, the target bits include M least significant bits in the bits occupied by the first parameter, and M is a positive integer greater than or equal to 1.

In some implementations, the second STA is an access point.

FIG. 36 is a schematic structural diagram of an apparatus for communication according to an embodiment of this application. Dashed lines in FIG. 36 indicate that a unit or module is optional. The apparatus 3600 may be configured to implement the methods described in the foregoing method embodiments. The apparatus 3600 may be a chip or a communication device.

The apparatus 3600 may include one or more processors 3610. The processor 3610 may support the apparatus 3600 in implementing the methods described in the foregoing method embodiments. The processor 3610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3600 may further include one or more memories 3620. The memory 3620 stores a program, where the program may be executed by the processor 3610, to cause the processor 3610 to execute the method described in the foregoing method embodiment. The memory 3620 may be separate from the processor 3610 or may be integrated into the processor 3610.

The apparatus 3600 may further include a transceiver 3630. The processor 3610 may communicate with another device or chip through the transceiver 3630. For example, the processor 3610 may transmit data to and receive data from another device or chip through the transceiver 3630.

An embodiment of this application further provides a computer-readable storage medium for storing a program. The computer-readable storage medium may be applied to the communication device provided in embodiments of this application, and the program causes a computer to perform the method executed by the communication device in various embodiments of this application.

An embodiment of this application further provides a computer program product. The computer program product includes a program. The computer program product may be applied to the communication device provided in embodiments of this application, and the program causes a computer to perform the methods performed by the communication device in various embodiments of this application.

An embodiment of this application further provides a computer program. The computer program may be applied to the terminal or the network device provided in embodiments of this application, and the computer program causes a computer to execute the methods executed by the communication device in various embodiments of this application.

It should be understood that the terms "system" and "network" in this application may be used interchangeably. In addition, the terms used in this application are merely used to explain specific embodiments of this application, and are not intended to limit this application. In the specification, claims, and accompanying drawings of this application, the terms "first", "second", "third", "fourth", and so on are intended to distinguish between different objects but do not describe a particular order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In embodiments of this application, the "protocol" may refer to a standard protocol in the communications field, and may include, for example, a WiFi protocol, and a related protocol applied to a future WiFi communications system, which is not limited in this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one location, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first station STA, a first physical protocol data unit PPDU to a second STA, wherein the first PPDU comprises first information and second information,
wherein the first information is used to preempt a transmission opportunity TXOP of the second STA and/or indicate that the first STA comprises to-be-transmitted low-latency data, and the second information is used to determine legitimacy of the first STA.

2. The method according to claim 1, wherein the second information is generated based on a group key or a pairwise key.

3. The method according to claim 2, wherein the group key comprises one or more of the following: a group temporal key GTK, an integrity group temporal key IGTK, a beacon integrity group temporal key BIGTK, or a control group temporal key CGTK.

4. The method according to any one of claims 1 to 3, wherein the first PPDU occupies a part or all of an operating bandwidth of the first STA.

5. The method according to any one of claims 1 to 4, wherein the first PPDU is used to carry a first medium access control MAC frame, and the second information is a message integrity code MIC in the first MAC frame.

6. The method according to claim 5, wherein the first MAC frame comprises a first frame check sequence FCS field, and a field corresponding to the MIC is located before or after the first FCS field.

7. The method according to claim 6, wherein the field corresponding to the MIC is located after the first FCS field, the first MAC frame further comprises a second FCS field, and the second FCS field is located after the field corresponding to the MIC.

8. The method according to any one of claims 1 to 4, wherein the second information is a secure long training field LTF in the first PPDU.

9. The method according to any one of claims 1 to 8, wherein the second information is generated based on a first parameter; and the second information is a MIC, and the first parameter is a packet number; or the second information is a secure LTF, and the first parameter is a sequence number.

10. The method according to claim 9, wherein before the transmitting, by the first STA, the first PPDU to the second STA, the method further comprises:
receiving, by the first STA, a second PPDU transmitted by the second STA, wherein the second PPDU comprises target bits, and the target bits are a part or all of bits occupied by the first parameter.

11. The method according to claim 10, wherein the second PPDU is used to carry a second MAC frame, and the second MAC frame comprises the target bits.

12. The method according to claim 11, wherein the second MAC frame comprises an aggregation control field, and the target bits are carried in the aggregation control field.

13. The method according to claim 11, wherein the second MAC frame comprises one or more special user information fields, and the target bits are carried in the one or more special user information fields.

14. The method according to claim 13, wherein the second MAC frame comprises a common information field, the common information field comprises third information, and the third information is used to indicate a quantity of the one or more special user information fields.

15. The method according to claim 13 or 14, wherein the second MAC frame is a trigger frame.

16. The method according to claim 11, wherein the second MAC frame is a data frame, a control frame, or a management frame.

17. The method according to any one of claims 11 to 16, wherein before the transmitting, by the first STA, the first PPDU to the second STA, the method further comprises:
receiving, by the first STA, a third MAC frame transmitted by the second STA, wherein the third MAC frame comprises bits other than the target bits in the bits occupied by the first parameter.

18. The method according to claim 17, wherein the third MAC frame is a beacon frame; or both the third MAC frame and the second MAC frame are carried in the second PPDU.

19. The method according to any one of claims 10 to 18, wherein the target bits comprise M least significant bits in the bits occupied by the first parameter, and M is a positive integer greater than or equal to 1.

20. The method according to claim 10, wherein the second PPDU comprises a signal SIG field, and the target bit are carried in the SIG field.

21. The method according to claim 20, wherein a user-specific field of the SIG field comprises one or more special user fields, and the target information is carried in the one or more special user fields.

22. The method according to claim 21, wherein the SIG field comprises a common field, the common field comprises fourth information, and the fourth information is used to indicate a quantity of the one or more special user fields.

23. The method according to claim 22, wherein the common field comprises a disregard field, and the fourth information is carried in the disregard field.

24. The method according to any one of claims 20 to 23, wherein before the transmitting, by the first STA, the first PPDU to the second STA, the method further comprises:
receiving, by the first STA, a fourth MAC frame transmitted by the second STA, wherein the fourth MAC frame comprises bits other than the target bits in the bits occupied by the first parameter.

25. The method according to claim 24, wherein the fourth MAC frame is a beacon frame.

26. The method according to claim 24 or 25, wherein the target bits comprise M least significant bits in the bits occupied by the first parameter, and M is a positive integer greater than or equal to 1.

27. The method according to any one of claims 1 to 26, wherein the second STA is an access point.

28. A wireless communication method, comprising:
receiving, by a second station STA, a first physical protocol data unit PPDU transmitted by a first STA, wherein the first PPDU comprises first information and second information,
wherein the first information is used to preempt a transmission opportunity TXOP of the second STA and/or indicate that the first STA comprises to-be-transmitted low-latency data, and the second information is used to determine legitimacy of the first STA.

29. The method according to claim 28, wherein the second information is generated based on a group key or a pairwise key.

30. The method according to claim 30, wherein the group key comprises one or more of the following: a group temporal key GTK, an integrity group temporal key IGTK, a beacon integrity group temporal key BIGTK, or a control group temporal key CGTK.

31. The method according to any one of claims 28 to 30, wherein the first PPDU occupies a part or all of an operating bandwidth of the first STA.

32. The method according to any one of claims 28 to 31, wherein the first PPDU is used to carry a first medium access control MAC frame, and the second information is a message integrity code MIC in the first MAC frame.

33. The method according to claim 32, wherein the first MAC frame comprises a first frame control sequence FCS field, and a field corresponding to the MIC is located before or after the first FCS field.

34. The method according to claim 33, wherein the field corresponding to the MIC is located after the first FCS field, the first MAC frame further comprises a second FCS field, and the second FCS field is located after the field corresponding to the MIC.

35. The method according to any one of claims 28 to 31, wherein the second information is a secure long training field LTF in the first PPDU.

36. The method according to any one of claims 28 to 35, wherein the second information is generated based on a first parameter; and the second information is a MIC, and the first parameter is a packet number; or the second information is a secure LTF, and the first parameter is a sequence number.

37. The method according to claim 36, wherein before the receiving, by the second STA, the first PPDU transmitted by the first STA, the method further comprises:
transmitting, by the second STA, a second PPDU to the first STA, wherein the second PPDU comprises target bits, and the target bits are a part or all of bits occupied by the first parameter.

38. The method according to claim 37, wherein the second PPDU is used to carry a second MAC frame, and the second MAC frame comprises the target bits.

39. The method according to claim 38, wherein the second MAC frame comprises an aggregation control field, and the target bits are carried in the aggregation control field.

40. The method according to claim 38, wherein the second MAC frame comprises one or more special user information fields, and the target bits are carried in the one or more special user information fields.

41. The method according to claim 40, wherein the second MAC frame comprises a common information field, the common information field comprises third information, and the third information is used to indicate a quantity of the one or more special user information fields.

42. The method according to claim 40 or 41, wherein the second MAC frame is a trigger frame.

43. The method according to claim 38, wherein the second MAC frame is a data frame, a control frame, or a management frame.

44. The method according to any one of claims 38 to 43, wherein before the receiving, by the second STA, the first PPDU transmitted by the first STA, the method further comprises:
transmitting, by the second STA, a third MAC frame to the second STA, wherein the third MAC frame comprises bits other than the target bits in the bits occupied by the first parameter.

45. The method according to claim 44, wherein the third MAC frame is a beacon frame; or both the third MAC frame and the second MAC frame are carried in the second PPDU.

46. The method according to any one of claims 37 to 45, wherein the target bits comprise M least significant bits in the bits occupied by the first parameter, and M is a positive integer greater than or equal to 1.

47. The method according to claim 37, wherein the second PPDU comprises a signal SIG field, and the target bits are carried in the SIG field.

48. The method according to claim 47, wherein a user-specific field of the SIG field comprises one or more special user fields, and the target information is carried in the one or more special user fields.

49. The method according to claim 48, wherein the SIG field comprises a common field, the common field comprises fourth information, and the fourth information is used to indicate a quantity of the one or more special user fields.

50. The method according to claim 49, wherein the common field comprises a disregard field, and the fourth information is carried in the disregard field.

51. The method according to any one of claims 47 to 50, wherein before the receiving, by the second STA, the first PPDU transmitted by the first STA, the method further comprises:
transmitting, by the second STA, a fourth MAC frame to the first STA, wherein the fourth MAC frame comprises bits other than the target bits in the bits occupied by the first parameter.

52. The method according to claim 51, wherein the fourth MAC frame is a beacon frame.

53. The method according to claim 51 or 52, wherein the target bits comprise M least significant bits in the bits occupied by the first parameter, and M is a positive integer greater than or equal to 1.

54. The method according to any one of claims 28 to 53, wherein the second STA is an access point.

55. A communication device, wherein the communication device is a first station STA, and the communication device comprises:
a first communication module, configured to transmit a first physical protocol data unit PPDU to a second STA, wherein the first PPDU comprises first information and second information,
wherein the first information is used to preempt a transmission opportunity TXOP of the second STA and/or indicate that the first STA comprises to-be-transmitted low-latency data, and the second information is used to determine legitimacy of the first STA.

56. The communication device according to claim 55, wherein the second information is generated based on a group key or a pairwise key.

57. The communication device according to claim 56, wherein the group key comprises one or more of the following: a group temporal key GTK, an integrity group temporal key IGTK, a beacon integrity group temporal key BIGTK, or a control group temporal key CGTK.

58. The communication device according to any one of claims 55 to 57, wherein the first PPDU occupies a part or all of an operating bandwidth of the first STA.

59. The communication device according to any one of claims 55 to 58, wherein the first PPDU is used to carry a first medium access control MAC frame, and the second information is a message integrity code MIC in the first MAC frame.

60. The communication device according to claim 59, wherein the first MAC frame comprises a first frame check sequence FCS field, and a field corresponding to the MIC is located before or after the first FCS field.

61. The communication device according to claim 60, wherein the field corresponding to the MIC is located after the first FCS field, the first MAC frame further comprises a second FCS field, and the second FCS field is located after the field corresponding to the MIC.

62. The communication device according to any one of claims 55 to 58, wherein the second information is a secure long training field LTF in the first PPDU.

63. The communication device according to any one of claims 55 to 62, wherein the second information is generated based on a first parameter; and the second information is a MIC, and the first parameter is a packet number; or the second information is a secure LTF, and the first parameter is a sequence number.

64. The communication device according to claim 63, wherein the communication device further comprises:
a second communication module, configured to: before the first STA transmits the first PPDU to the second STA, receive a second PPDU transmitted by the second STA, wherein the second PPDU comprises target bits, and the target bits are a part or all of bits occupied by the first parameter.

65. The communication device according to claim 64, wherein the second PPDU is used to carry a second MAC frame, and the second MAC frame comprises the target bits.

66. The communication device according to claim 65, wherein the second MAC frame comprises an aggregation control field, and the target bits are carried in the aggregation control field.

67. The communication device according to claim 65, wherein the second MAC frame comprises one or more special user information fields, and the target bits are carried in the one or more special user information fields.

68. The communication device according to claim 67, wherein the second MAC frame comprises a common information field, the common information field comprises third information, and the third information is used to indicate a quantity of the one or more special user information fields.

69. The communication device according to claim 67 or 68, wherein the second MAC frame is a trigger frame.

70. The communication device according to claim 65, wherein the second MAC frame is a data frame, a control frame, or a management frame.

71. The communication device according to any one of claims 65 to 70, further comprising:
a third communication module, configured to: before the first STA transmits the first PPDU to the second STA, receive a third MAC frame transmitted by the second STA, wherein the third MAC frame comprises bits other than the target bits in the bits occupied by the first parameter.

72. The communication device according to claim 71, wherein the third MAC frame is a beacon frame; or both the third MAC frame and the second MAC frame are carried in the second PPDU.

73. The communication device according to any one of claims 64 to 72, wherein the target bits comprise M least significant bits in the bits occupied by the first parameter, and M is a positive integer greater than or equal to 1.

74. The communication device according to claim 64, wherein the second PPDU comprises a signal SIG field, and the target bits are carried in the SIG field.

75. The communication device according to claim 74, wherein a user-specific field of the SIG field comprises one or more special user fields, and the target information is carried in the one or more special user fields.

76. The communication device according to claim 75, wherein the SIG field comprises a common field, the common field comprises fourth information, and the fourth information is used to indicate a quantity of the one or more special user fields.

77. The communication device according to claim 76, wherein the common field comprises a disregard field, and the fourth information is carried in the disregard field.

78. The communication device according to any one of claims 74 to 77, further comprising:
a fourth communication module, configured to: before the first STA transmits the first PPDU to the second STA, receive a fourth MAC frame transmitted by the second STA, wherein the fourth MAC frame comprises bits other than the target bits in the bits occupied by the first parameter.

79. The communication device according to claim 78, wherein the fourth MAC frame is a beacon frame.

80. The communication device according to claim 78 or 79, wherein the target bits comprise M least significant bits in the bits occupied by the first parameter, and M is a positive integer greater than or equal to 1.

81. The communication device according to any one of claims 55 to 80, wherein the second STA is an access point.

82. A communication device, wherein the communication device is a second station STA, and the communication device comprises:
a first communication module, configured to receive a first physical protocol data unit PPDU transmitted by a first STA, wherein the first PPDU comprises first information and second information,
wherein the first information is used to preempt a transmission opportunity TXOP of the second STA and/or indicate that the first STA comprises to-be-transmitted low-latency data, and the second information is used to determine legitimacy of the first STA.

83. The communication device according to claim 82, wherein the second information is generated based on a group key or a pairwise key.

84. The communication device according to claim 83, wherein the group key comprises one or more of the following: a group temporal key GTK, an integrity group temporal key IGTK, a beacon integrity group temporal key BIGTK, or a control group temporal key CGTK.

85. The communication device according to any one of claims 82 to 84, wherein the first PPDU occupies a part or all of an operating bandwidth of the first STA.

86. The communication device according to any one of claims 82 to 85, wherein the first PPDU is used to carry a first medium access control MAC frame, and the second information is a message integrity code MIC in the first MAC frame.

87. The communication device according to claim 86, wherein the first MAC frame comprises a first frame control sequence FCS field, and a field corresponding to the MIC is located before or after the first FCS field.

88. The communication device according to claim 87, wherein the field corresponding to the MIC is located after the first FCS field, the first MAC frame further comprises a second FCS field, and the second FCS field is located after the field corresponding to the MIC.

89. The communication device according to any one of claims 82 to 85, wherein the second information is a secure long training field LTF in the first PPDU.

90. The communication device according to any one of claims 82 to 89, wherein the second information is generated based on a first parameter; and the second information is a MIC, and the first parameter is a packet number; or the second information is a secure LTF, and the first parameter is a sequence number.

91. The communication device according to claim 90, wherein the communication device further comprises:
a second communication module, configured to: before the second STA receives the first PPDU transmitted by the first STA, transmit a second PPDU to the first STA, wherein the second PPDU comprises target bits, and the target bits are a part or all of bits occupied by the first parameter.

92. The communication device according to claim 91, wherein the second PPDU is used to carry a second MAC frame, and the second MAC frame comprises the target bits.

93. The communication device according to claim 92, wherein the second MAC frame comprises an aggregation control field, and the target bits are carried in the aggregation control field.

94. The communication device according to claim 92, wherein the second MAC frame comprises one or more special user information fields, and the target bits are carried in the one or more special user information fields.

95. The communication device according to claim 94, wherein the second MAC frame comprises a common information field, the common information field comprises third information, and the third information is used to indicate a quantity of the one or more special user information fields.

96. The communication device according to claim 94 or 95, wherein the second MAC frame is a trigger frame.

97. The communication device according to claim 92, wherein the second MAC frame is a data frame, a control frame, or a management frame.

98. The communication device according to any one of claims 92 to 97, further comprising:
a third communication module, configured to: before the second STA receives the first PPDU transmitted by the first STA, transmit a third MAC frame to the second STA, wherein the third MAC frame comprises bits other than the target bits in the bits occupied by the first parameter.

99. The communication device according to claim 98, wherein the third MAC frame is a beacon frame; or both the third MAC frame and the second MAC frame are carried in the second PPDU.

100. The communication device according to any one of claims 91 to 99, wherein the target bits comprise M least significant bits in the bits occupied by the first parameter, and M is a positive integer greater than or equal to 1.

101. The communication device according to claim 98, wherein the second PPDU comprises a signal SIG field, and the target bits are carried in the SIG field.

102. The communication device according to claim 101, wherein a user-specific field of the SIG field comprises one or more special user fields, and the target information is carried in the one or more special user fields.

103. The communication device according to claim 102, wherein the SIG field comprises a common field, the common field comprises fourth information, and the fourth information is used to indicate a quantity of the one or more special user fields.

104. The communication device according to claim 103, wherein the common field comprises a disregard field, and the fourth information is carried in the disregard field.

105. The communication device according to any one of claims 101 to 104, further comprising:
a fourth communication module, configured to: before the second STA receives the first PPDU transmitted by the first STA, transmit a fourth MAC frame to the first STA, wherein the fourth MAC frame comprises bits other than the target bits in the bits occupied by the first parameter.

106. The communication device according to claim 105, wherein the fourth MAC frame is a beacon frame.

107. The communication device according to claim 105 or 106, wherein the target bits comprise M least significant bits in the bits occupied by the first parameter, and M is a positive integer greater than or equal to 1.

108. The communication device according to any one of claims 82 to 107, wherein the second STA is an access point.

109. A communication device, comprising a memory and a processor, wherein the memory is configured to store a program, and the processor is configured to invoke the program in the memory to cause the communication device to execute the method according to any one of claims 1 to 27 or 28 to 54.

110. An apparatus, comprising a processor, configured to invoke a program from a memory, to cause the apparatus to execute the method according to any one of claims 1 to 27 or claims 28 to 54.

111. A chip, comprising a processor, configured to invoke a program from a memory, to cause a device installed with the chip to execute the method according to any one of claims 1 to 27 or claims 28 to 54.

112. A computer-readable storage medium, storing a program, wherein the program causes a computer to execute the method according to any one of claims 1 to 27 or claims 28 to 54.

113. A computer program product, comprising a program, wherein the program causes a computer to execute the method according to any one of claims 1 to 27 or claims 28 to 54.

114. A computer program, wherein the computer program causes a computer to execute the method according to any one of claims 1 to 27 or claims 28 to 54.
